(19) **Europäisches Patentamt / European Patent Office / Office européen des brevets**

(11) **EP 1 631 774 B1**

(12) **FASCICULE DE BREVET EUROPEEN**

(45) Date de publication et mention
de la délivrance du brevet:
**22.08.2007 Bulletin 2007/34**

(51) Int Cl.:
**F25B 17/08** (2006.01)

(21) Numéro de dépôt: **04767256.3**

(22) Date de dépôt: **04.06.2004**

(86) Numéro de dépôt international:
**PCT/FR2004/001388**

(87) Numéro de publication internationale:
**WO 2004/111556 (23.12.2004 Gazette 2004/52)**

(54) **PROCEDE DE REFROIDISSEMENT D'UN PRODUIT, NOTAMMENT POUR LA LIQUEFACTION D'UN GAZ, ET DISPOSITIF POUR SA MISE EN OEUVRE**

VERFAHREN ZUM KÜHLEN EINES PRODUKTS, BESONDERS ZUR VERFLÜSSIGUNG EINES GASES UND VORRICHTUNG FÜR DIE DURCHFÜHRUNG DIESES VERFAHRENS

METHOD FOR COOLING A PRODUCT, PARTICULARLY, FOR LIQUEFYING A GAS, AND DEVICE FOR IMPLEMENTING THIS METHOD

(84) Etats contractants désignés:
**DE ES FR IT RO**

(30) Priorité: **06.06.2003 FR 0306839**

(43) Date de publication de la demande:
**08.03.2006 Bulletin 2006/10**

(73) Titulaire: **Gaz Transport et Technigaz
78470 Saint-Rémy-Lès-Chevreuse (FR)**

(72) Inventeurs:
• **Michalski, Pierre
F-76620 Le Havre (FR)**

• **Gourmelen, Pierre
F-29870 Landeda (FR)**
• **Blaizat, Claude
F-60000 Beauvais (FR)**

(74) Mandataire: **Laget, Jean-Loup
Cabinet PEUSCET
161, rue de Courcelles
75017 Paris (FR)**

(56) Documents cités:
**EP-A- 1 111 315      US-A- 4 827 728
US-A- 5 339 649      US-A- 5 761 925**

Printed by Jouve, 75001 PARIS (FR)

**Description**

La présente invention se rapporte à un procédé de refroidissement d'un produit et à un dispositif pour sa mise en oeuvre. Un tel procédé peut être mis en oeuvre notamment pour liquéfier un produit, comme du gaz naturel.

On connaît d'après FR2489101 un procédé de refroidissement et un dispositif pour sa mise en oeuvre qui font appel aux propriétés du couple zéolithe/eau. Toutefois, l'enseignement de ce document ne permet pas d'atteindre de très basses températures.

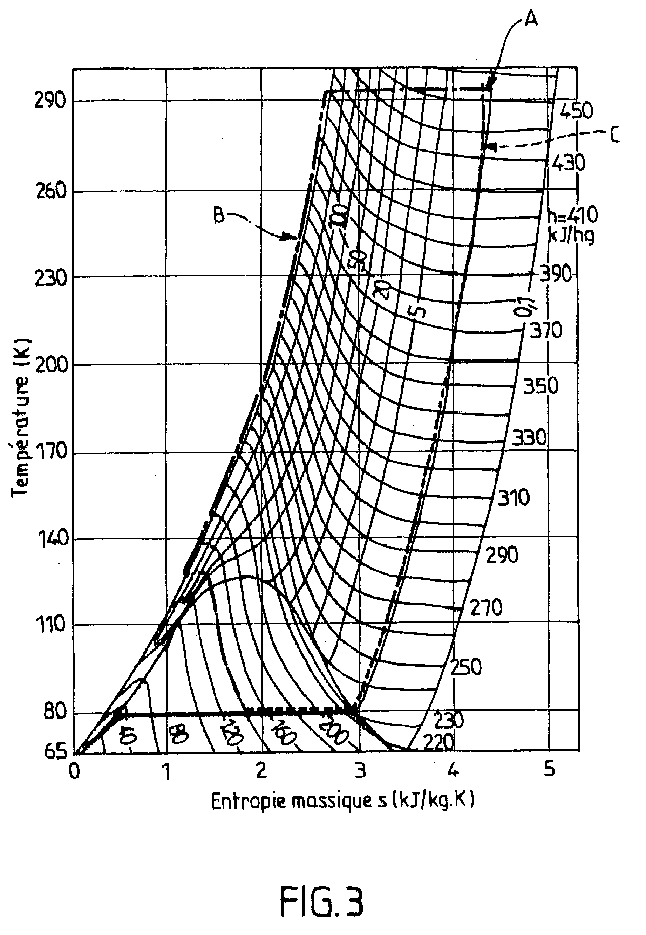

On connaît des procédés de liquéfaction d'un produit en phase vapeur dans lesquels, à partir d'un état initial en phase vapeur au voisinage des conditions normales de température et de pression, on soumet le produit à une compression isotherme jusqu'à quelques dizaines voire centaines de bars, puis à un refroidissement isobare, et enfin à une détente isenthalpe pour atteindre un état final en phase liquide instable à la pression normale, c'est-à-dire atmosphérique. Un tel procédé est représenté par la courbe B sur la figure 3, l'état initial étant indiqué par le point A. De tels procédés, par exemple les procédés CLAUDE et LINDE, permettent notamment de liquéfier et séparer les constituants de l'air déshydraté. Pour cela, de grands compresseurs sont nécessaires, qui entraînent une importante dépense d'énergie électrique ou mécanique, c'est-à-dire d'énergie secondaire. Un tel procédé de liquéfaction est une transformation ouverte appliquée directement au produit fluide à refroidir et qui ne nécessite donc aucun fluide frigorigène séparé. Des inconvénients sont la dépense énergétique nécessaire à la compression du produit jusqu'à un état sur-critique et la faible proportion du produit qui participe à l'effet attendu (phase liquide). Un tel procédé permet de gros écarts de température moyennant un coût énergétique élevé.

US5339649 décrit un réfrigérateur cryogénique à deux étages pour liquéfier de l'hélium destiné à refroidir un aimant supraconducteur. Dans l'étage le plus froid, le fluide frigorifique est de l'hélium que l'on désorbe à une pression comprise entre 14 et 18 atm par chauffage de l'adsorbant. Cet hélium surcritique n'est liquéfié qu'en aval de la vanne de détente de Joule Thomson. Dans l'autre étage, le fluide frigorifique est de l'hydrogène et un absorbant chimique comme le LaNi5 est employé. Là encore, l'hydrogène n'est liquéfié qu'en aval de la vanne de détente de Joule Thomson. A chaque fois, il n'y a qu'une fraction du fluide qui est à liquéfiée et qui participe donc à l'effet frigorifique. La compression isochore du fluide dans l'enceinte d'adsorption présente l'avantage de consommer de la chaleur et non de l'énergie secondaire. Cependant, une compression isochore est plus coûteuse énergie que toute autre forme de compression (isotherme, adiabatique). L'obtention d'hélium et d'hydrogène surcritique nécessite ainsi une dépense énergétique très importante, globalement proportionnelle à l'écart de pression, qui pèse sur le rendement énergétique de cette machine. De plus, la détente de Joule Thomson de l'hydrogène ne permet de le liquéfier qu'à la condition d'un pré-refroidissement suffisant. Ce pré-refroidissement est obtenu par échange de chaleur avec une réserve d'azote liquide. La consommation d'azote liquide pèse aussi sur le rendement énergétique de ce réfrigérateur. Ce réfrigérateur est une machine de faible puissance et de petite taille conçue dans le but d'être embarquée sur un véhicule. Son faible rendement, qui découle de la faible fraction de fluide liquéfié, du coût de la compression et de la consommation d'azote liquide en tant que source chaude vers laquelle la chaleur est transférée, la rend inadaptée à des applications de plus forte puissance.

L'invention vise à fournir un procédé de refroidissement, applicable notamment à la liquéfaction d'un gaz, qui soit moins coûteux en énergie et qui permette d'obtenir un large choix de températures finales, notamment des températures très basses. Un autre but de l'invention est de fournir un procédé et un dispositif aptes à produire du froid à forte puissance avec un bon rendement énergétique, notamment dans la plage de températures entre -80°C et -220°C. Encore un autre but est de proposer une installation assurant la descente en température jusqu'à la température souhaitée en respectant des contraintes de masse de l'installation, de coût énergétique du refroidissement, de sûreté et de fiabilité de l'installation.

Pour cela, l'invention fournit un procédé de refroidissement d'un produit comportant N cycles d'adsorption/désorption ordonnés sous vide d'air, N étant un entier supérieur à 1, chaque cycle comportant les étapes consistant à :

- extraire de la chaleur d'un fluide frigorifique en phase vapeur dans un condenseur à une première pression inférieure à la pression critique dudit fluide pour condenser ledit fluide frigorifique,
- introduire ledit fluide frigorifique en phase liquide dans un évaporateur à une deuxième pression inférieure à la première pression pour vaporiser une partie dudit fluide frigorifique et refroidir l'autre partie dudit fluide frigorifique jusqu'à une température de vaporisation dudit fluide frigorifique à ladite deuxième pression, ladite température de vaporisation étant décroissante d'un cycle au cycle suivant, lesdites première et deuxième pressions étant choisies dans chaque cycle de manière que ladite température de vaporisation dans un cycle soit à chaque fois inférieure à la température de condensation du fluide frigorifique dans le cycle suivant à la première pression dudit cycle suivant,
- apporter de la chaleur à la partie liquide du fluide frigorifique à ladite deuxième pression dans ledit évaporateur pour évaporer ledit fluide frigorifique,
- adsorber ledit fluide frigorifique en phase vapeur dans au moins une enceinte d'adsorption/désorption reliée audit évaporateur et contenant un adsorbant en zéolithe,
- après qu'une quantité dudit fluide frigorifique a été adsorbée dans ledit adsorbant en zéolithe, régénérer ledit adsorbant en zéolithe par chauffage pour désorber ladite quantité de fluide frigorifique en phase vapeur,
- renvoyer ladite quantité de fluide frigorifique en phase vapeur vers ledit condenseur,

ledit procédé comportant en outre les étapes consistant à :

effectuer N-1 échanges de chaleur à chaque fois entre le fluide frigorifique dans l'évaporateur d'un cycle et le fluide frigorifique dans le condenseur du cycle suivant dans l'ordre des cycles pour réaliser ainsi ledit apport de chaleur dans ledit évaporateur et ladite extraction de chaleur dans ledit condenseur,
et refroidir ledit produit par échange de chaleur avec le fluide frigorifique au moins dans l'évaporateur du dernier cycle.

La zéolithe est une argile adsorbante qui a le pouvoir de fixer de nombreux corps et qui est disponible à faible coût. Par exemple, à température normale ou ambiante, elle peut fixer l'eau jusqu'à plus de 25% de son propre poids. L'adsorption est exothermique et la désorption est endothermique. Lors de l'adsorption d'eau, il se dégage 3500 kJ environ par kg d'eau fixée. La zéolithe peut aussi être calibrée pour agir comme un tamis moléculaire, de manière à sélectionner les corps adsorbés sur le critère de leurs dimensions moléculaires.

Dans chaque cycle, l'adsorption de la phase vapeur dans l'enceinte d'adsorption/désorption agit comme un pompage qui abaisse la pression partielle de fluide frigorifique et déplace ainsi l'équilibre de phases dans l'évaporateur de manière à entretenir la vaporisation du fluide frigorifique, ce qui refroidit l'évaporateur par extraction de chaleur latente de vaporisation. Ce pompage est obtenu de manière physico-chimique sans fourniture de travail mécanique. Le procédé n'utilise ainsi qu'une faible quantité énergie secondaire, pour faire circuler le fluide frigorifique. La chaleur latente prélevée dans l'évaporateur d'un cycle est à chaque fois compensée par une extraction de chaleur dans le condenseur du cycle suivant, ce qui permet de condenser le fluide frigorifique dans le condenseur. De plus, cette extraction de chaleur latente sert, du moins dans le dernier cycle, à refroidir le produit visé.

La régénération consiste à chauffer l'adsorbant pour réduire son pouvoir d'adsorption et ainsi désorber le fluide. La température de régénération de la zéolithe peut être choisie dans chaque cycle de manière à provoquer une désorption totale ou presque du fluide frigorifique correspondant. Toutefois, la zéolithe étant très faiblement conductrice de chaleur, une désorption totale prend un temps long: De préférence, la désorption est donc effectuée partiellement, par exemple jusqu'à une teneur massique de 10%, de manière à accélérer la cinétique du procédé.

Ainsi, le fluide frigorifique de chaque cycle est recyclé et peut tourner en circuit fermé pendant une longue durée. L'essentiel de l'énergie consommée par le procédé, à savoir pour régénérer l'adsorbant, peut être fourni sous forme de chaleur, c'est-à-dire d'énergie primaire.

Avantageusement, un fluide frigorifique distinct est utilisé dans chaque cycle, chaque fluide frigorifique étant sélectionné de manière présenter une température de vaporisation à la deuxième pression du cycle correspondant qui soit inférieure à la température de condensation à la première pression du fluide utilisé dans le cycle précédent, de manière que le transfert de chaleur depuis le fluide à condenser vers le fluide à évaporer soit possible. Les critères de sélection des fluides sont à la fois les caractéristiques intrinsèques du fluide : chaleur latente de changement d'état, courbe d'équilibre liquide-vapeur puis solide-vapeur, température critique, température du point triple, compatibilité avec le matériau de confinement, risques potentiels (explosion, toxicité), et les caractéristiques du couple fluide/adsorbant en zéolithe : courbe d'adsorption (taux d'adsorption en fonction de la température), stabilité du fluide en présence de zéolithe. Après élimination des fluides pouvant présenter des risques inacceptables, on trie ceux qui permettent d'assurer la cascade suivant le principe selon lequel l'évaporation dans un étage est assurée par la condensation dans l'étage suivant.

Les fluides frigorifiques sont aussi choisis en fonction de la capacité de la zéolithe à réaliser une adsorption significative et efficace et en fonction de la chaleur d'adsorption correspondante. Les taux d'adsorption attendus peuvent aller jusqu'à 30% (par exemple 30% en masse d'eau pour la zéolithe 13X, 20 % en masse d'eau pour la zéolithe 4A). Les températures de désorption sont variables (250 °C pour l'eau sur la zéolithe 4 A, 70 °C pour l'azote sur la zéolithe 4 A, 90 °C pour l'eau sur la zéolithe 13X). Dans tous les cas, l'adsorption est élevée à basse température. Les chaleurs d'adsorption sont de l'ordre de grandeur de 1,5 fois la chaleur latente de vaporisation du fluide adsorbé.

Selon des réalisations particulières de l'invention, lesdits fluides frigorifiques sont choisis parmi l'eau (Tb=100°C), le butane (Tb=-0,5°C), l'ammoniac (Tb=-33°C), le dioxyde de carbone (Tb=-37°C), le propane (Tb=-42°C), l'acétylène (Tb=-84°C), l'éthane (Tb=-88°C), l'éthylène (Tb=-103,9°C), le xénon (Tb=-108°C), le krypton (Tb=-152°C), le méthane (Tb=-161,6°C), l'argon (Tb=-185°C), l'azote (Tb=-195,5°C) et le néon (Tb=-245,92°C), où Tb désigne la température d'ébullition à pression normale. Tous ces fluides ou au moins certains d'entre eux peuvent ainsi être utilisés, dans cet ordre ou dans un autre ordre, dans les cycles successifs. Par exemple, le fluide frigorifique du premier cycle est l'eau.

Avantageusement, dans au moins un desdits cycles, de préférence dans tous les cycles, ledit fluide frigorifique présente une chaleur latente de vaporisation supérieure à 300kJ/kg, de préférence supérieure ou égale à environ 450kJ/kg. Plus les échanges d'énergie doivent être importants, plus il convient d'utiliser des fluides de chaleur latente élevée. Un seuil minimum de 300 kJ/kg pour un fluide dans la séquence de fluides, pour une valeur générale par exemple autour de 450 kJ/kg est raisonnable dans une installation de liquéfaction de méthane. Pour des installations plus petites permettant de descendre à des températures plus basses, on peut abaisser ce seuil.

Avantageusement, dans au moins un desdits cycles, de préférence dans tous les cycles, la température dans l'évaporateur est supérieure au point triple dudit fluide frigorifique. Ainsi, on obtient une phase liquide plutôt que solide dans l'évaporateur, ce qui permet des échanges thermiques plus efficaces. En d'autres termes, la pression critique du fluide doit être supérieure à la première pression (pression haute) du cycle, et la température du point triple doit être si possible inférieure à la température basse du fluide, correspondant à la deuxième pression. Toutefois, cette dernière contrainte technologique peut être levée en fonction de la conception des échangeurs.

De préférence, dans au moins un desdits cycles, de préférence dans tous lesdits cycles, la première pression dans ledit condenseur est inférieure à 3 bar, par exemple comprise entre 0,4 et 3 bar et de préférence voisine de la pression normale. Ainsi, la dépense énergétique nécessaire pour comprimer le fluide frigorifique jusqu'à la première pression est réduite.

La température dans chaque condenseur est à chaque fois la température de condensation du fluide correspondant à la première pression régnant dans le condenseur, qui peut être la pression normale ou une autre pression. Lors de la désorption, il est possible de compresser un fluide jusqu'à une pression de confort au-dessus de la pression normale, par exemple à 2 atm, pour accroître sa température de condensation de manière à l'adapter à la température d'évaporation du fluide dans l'évaporateur de l'étage précédent.

Avantageusement, dans au moins un desdits cycles, de préférence dans tous lesdits cycles, la pression maximale est inférieure à 5 bar, de préférence inférieure à 3 bar, et de manière encore plus préférée voisine de la pression normale. La masse de l'installation de mise en oeuvre du procédé est très sensible à la pression haute de chacun des cycles. Pour des raisons de résistance mécanique des enceintes et d'inertie thermique des composants, il convient de limiter au maximum les pressions hautes. Ainsi, il n'est pas nécessaire de construire une installation supportant de forts écarts de pression. Le coût et la sûreté de l'installation frigorifique sont ainsi améliorés.

La fiabilité de l'installation dépend de l'étanchéité des enceintes. Il convient donc d'éviter de travailler à des pressions basses trop faibles. Une pression absolue minimale supérieure ou égale à 0,5kPa est, par exemple, une valeur raisonnable dans chacun des cycles.

De préférence, dans au moins un desdits cycles, ledit fluide frigorifique en phase liquide est introduit sous une forme atomisée dans l'évaporateur. Ainsi, l'évaporation est accélérée et la puissance frigorifique est donc accrue.

De préférence, ladite extraction de chaleur dans le condenseur du premier cycle est réalisée par échange de chaleur avec un fluide environnemental à température ambiante. Ce fluide environnemental vers lequel est évacuée la chaleur de condensation du premier cycle, et qui constitue donc la source chaude vis-à-vis de la machine frigorifique mettant en oeuvre le procédé ci-dessus, peut être par exemple l'air atmosphérique ou de l'eau d'une rivière, d'un lac ou de la mer.

Avantageusement, dans au moins un desdits cycles, le chauffage dudit adsorbant en zéolithe à régénérer est réalisé par échange de chaleur avec un fluide environnemental à température ambiante. Par exemple, la régénération est réalisée ainsi dans le deuxième cycle et dans les cycles suivants le cas échant.

Avantageusement, le procédé selon l'invention comporte l'étape consistant à effectuer au moins un échange de chaleur, de préférence au moins N-1 échanges de chaleur, à chaque fois entre ledit adsorbant en zéolithe en cours d'adsorption dans une enceinte d'adsorption/désorption d'un cycle et ledit adsorbant en zéolithe en cours de régénération dans une enceinte d'adsorption/désorption du cycle suivant. Ainsi, les échanges de chaleur entre l'enceinte d'adsorption/désorption d'un cycle et l'enceinte d'adsorption/désorption du cycle suivant permettent de réaliser la régénération sans apport de chaleur depuis l'extérieur, sauf pour la régénération du premier cycle. Toutefois, même pour le premier cycle, c'est-à-dire celui où on atteint la température haute la plus élevée, le procédé peut être adapté pour fonctionner à une température relativement basse, par exemple 250°C dans le cas du couple zéolithe/eau. De ce fait, il est aisé de se procurer une source chaude à la température de régénération du premier cycle. Le procédé peut ainsi fonctionner en co-génération avec une installation industrielle productrice de chaleur en tant qu'effluent, comme un moteur thermique.

L'adsorption est une réaction exothermique et le pouvoir d'adsorption de la zéolithe décroît à mesure que sa température augmente. De préférence, il est prévu dans chaque cycle de refroidir l'adsorbant en zéolithe dans l'enceinte d'adsorption/désorption dans laquelle ledit fluide frigorifique est adsorbé. De cette manière, on peut maintenir l'adsorbant à une température de fonctionnement correcte.

De préférence, on prévoit l'étape consistant à effectuer au moins un échange de chaleur, de préférence N-1 échanges de chaleur, à chaque fois entre le fluide frigorifique dans l'évaporateur d'un cycle et ledit adsorbant en zéolithe dans l'enceinte d'adsorption/désorption du cycle suivant en cours d'adsorption, pour refroidir ledit adsorbant en zéolithe. Ainsi, le refroidissement de la zéolithe en cours d'adsorption est obtenu sans consommation supplémentaire d'énergie.

Avantageusement, dans chaque cycle, on prévoit au moins deux enceintes d'adsorption/désorption pour effectuer simultanément ladite adsorption du fluide frigorifique dans une desdites enceintes d'adsorption/désorption et ladite régénération de l'adsorbant en zéolithe dans une autre desdites enceintes d'adsorption/désorption.

De préférence, dans chaque cycle, on prévoit au moins trois enceintes d'adsorption/désorption pour effectuer aussi simultanément une étape de refroidissement après régénération de l'adsorbant en zéolithe dans encore une autre desdites enceintes d'adsorption/désorption. Ainsi, chaque enceinte d'adsorption/désorption effectue successivement trois étapes : une étape d'adsorption, pendant laquelle il est préférable de refroidir l'adsorbant, une étape de régénération ou désorption, pendant laquelle on chauffe l'adsorbant, et une étape de refroidissement après régénération, pendant laquelle on refroidit l'adsorbant avant de recommencer l'adsorption.

De préférence, on prévoit l'étape consistant à effectuer au moins un échange de chaleur, de préférence N-1 échanges de chaleur, à chaque fois entre le fluide frigorifique dans l'évaporateur d'un cycle et ledit adsorbant en zéolithe dans l'enceinte d'adsorption/désorption du cycle suivant en cours de refroidissement après régénération. Ainsi, le refroidissement de la zéolithe après régénération peut être obtenu sans consommation supplémentaire d'énergie.

Avantageusement, on prévoit l'étape consistant, dans au moins un desdits cycles, de préférence dans chacun desdits cycles, à refroidir ladite quantité de fluide frigorifique en phase vapeur par échange de chaleur avec une source à température ambiante avant de réintroduire ladite quantité de fluide frigorifique dans le condenseur. Ainsi, on peut refroidir le fluide frigorifique en deux étapes pour le condenser : d'abord par échange de chaleur avec une source à température ambiante, puis dans le condenseur par échange de chaleur avec l'évaporateur du cycle précédent. Ceci est particulièrement avantageux lorsque la température de condensation visée est en dessous de la température ambiante. Lorsque la température de condensation visée est au-dessus de la température ambiante, l'échange de chaleur avec une source à température ambiante peut être suffisant pour obtenir la condensation voulue.

Au sens de l'invention, sous vide d'air signifie que les cycles ont lieu sous une pression partielle d'air réduite, le vide pouvant être plus ou moins poussé en fonction de la vitesse de transfert que l'on souhaite obtenir. Avantageusement, la pression partielle d'air dans chaque cycle est inférieure à environ 1 kPa, de préférence inférieure à environ 0,1 kPa. Pour cela, on prévoit de préférence une pompe à vide dans chaque étage à cause de l'étanchéité imparfaite. Il est aussi avantageux de prévoir une pompe à vide reliée à ladite ou chaque enceinte d'adsorption/désorption, pour extraire de l'enceinte l'air et/ou d'éventuelles impuretés non adsorbables qui étaient initialement dissoutes dans le fluide frigorifique.

La température basse du dernier cycle est choisie en fonction de l'application. Par exemple, elle peut être comprise entre-40°C et -220°C. Une température très basse convient notamment pour la liquéfaction de certains gaz.

Avantageusement, le produit à refroidir est initialement en phase vapeur et on refroidit ledit produit, notamment de manière sensiblement isobare, pour le liquéfier. Ce procédé permet de liquéfier un corps, par exemple du méthane ou des constituants de l'air, sans utiliser une haute pression, ce qui présente des avantages en terme de coût d'équipement et de sûreté.

Le produit à refroidir peut être de toute nature. Selon une réalisation particulière de l'invention, ledit produit est un gaz à usage de carburant ou de matière première polymérisable, par exemple le gaz de pétrole liquéfié, le méthane, l'éthane, le propane, le butane, l'éthylène, le propylène, l'hydrogène et autres, notamment pour embarquer ledit produit sur un navire de transport de gaz carburant liquide ou pour des installations à terre.

Selon une autre réalisation particulière de l'invention, le produit est un gaz à usage de matière première, par exemple l'air liquide, l'azote et l'oxygène, que l'on refroidit ou liquéfie entre -80°C et -220°C.

Dans une variante de réalisation, on prévoit une étape consistant à effectuer au moins un échange de chaleur, de préférence N-1 échanges de chaleur, à chaque fois entre le fluide frigorifique dans le condenseur d'un cycle et ledit adsorbant en zéolithe à ladite température haute du cycle suivant, ladite température intermédiaire d'un cycle étant à chaque fois supérieure ou égale à ladite température haute du cycle suivant. Dans ce cas, la température haute et la température intermédiaire sont choisies également décroissantes d'un cycle au cycle suivant. Toutefois, il est nécessaire de bien contrôler les conditions de condensation du fluide frigorifique dans le condenseur, notamment la température, pour pouvoir utiliser la chaleur de condensation selon cette variante.

L'invention fournit aussi un dispositif pour la mise en oeuvre du procédé précité, comprenant N étages de refroidissement ordonnés sous vide d'air, N étant un entier supérieur à 1, chaque étage comportant :

- un condenseur apte à contenir un fluide frigorifique dans une phase liquide,
- un évaporateur relié audit condenseur par une conduite,
- au moins une enceinte d'adsorption/désorption contenant un adsorbant en zéolithe et reliée audit évaporateur par l'intermédiaire d'une vanne amont,
- une conduite munie d'une vanne aval pour renvoyer le fluide frigorifique depuis ladite enceinte d'adsorption/désorption vers ledit condenseur,
- un moyen de chauffage dans ladite ou chaque enceinte d'adsorption/désorption apte à chauffer ledit adsorbant en zéolithe jusqu'à une température de régénération,

ledit dispositif comportant N-1 échangeurs de chaleur agencés à chaque fois de manière à échanger la chaleur entre le fluide frigorifique dans l'évaporateur d'un étage et le fluide frigorifique dans le condenseur de l'étage suivant dans l'ordre des cycles pour refroidir ce dernier, et

un échangeur de chaleur terminal agencé de manière à échanger la chaleur entre un produit à refroidir et le fluide frigorifique dans au moins l'évaporateur du dernier étage.

De préférence, dans au moins un desdits étages, une enceinte de refroidissement du fluide frigorifique est agencée entre ladite ou chaque enceinte d'adsorption/désorption et ledit condenseur et est en contact thermique avec une source de chaleur à température ambiante.

Avantageusement, le dispositif selon l'invention comporte, en tant que moyens de chauffage desdites enceintes d'adsorption/désorption, au moins un échangeur de chaleur, de préférence au moins N-1 échangeurs de chaleur, agencés à chaque fois de manière à échanger la chaleur entre ledit adsorbant en zéolithe en cours d'adsorption dans ladite ou une desdites enceinte d'adsorption/désorption d'un étage et ledit adsorbant en zéolithe en cours de régénération dans ladite ou une desdites enceinte d'adsorption/désorption de l'étage suivant.

Avantageusement, on prévoit un moyen de refroidissement dans ladite ou chaque enceinte d'adsorption/désorption pour refroidir ledit adsorbant en zéolithe en cours d'adsorption.

Avantageusement, le dispositif comporte, en tant que moyens de refroidissement desdites enceintes d'adsorption/désorption, au moins N-1 échangeurs de chaleur agencés à chaque fois de manière à échanger la chaleur entre le fluide frigorifique dans l'évaporateur d'un étage et ledit adsorbant en zéolithe dans ladite ou chaque enceinte d'adsorption/désorption de l'étage suivant.

De préférence, chaque étage comprend au moins deux, de préférence trois, enceintes d'adsorption/désorption, chacune étant reliée audit évaporateur par l'intermédiaire d'une vanne amont respective et audit condenseur par l'intermédiaire d'une vanne aval respective. Ainsi, le dispositif peut fonctionner en continu, l'adsorption étant effectuée en temps masqué successivement dans chaque enceinte pendant que les autres enceintes sont respectivement régénérées et refroidies après régénération.

Avantageusement, le dispositif comporte un moyen de commande desdites vannes qui est programmé pour ouvrir et fermer lesdites vannes amont et aval selon un cycle de temps masqué, dans lequel chaque enceinte effectue successivement une étape d'adsorption, pour laquelle la vanne amont est ouverte et la vanne aval est fermée, une étape de régénération ou désorption, pour laquelle la vanne aval est ouverte et la vanne amont est fermée, et une étape de refroidissement après régénération, pour laquelle la vanne aval et la vanne amont sont fermées.

Selon une variante de réalisation, à condition de bien contrôler les conditions de condensation du fluide dans le condenseur, on peut prévoir, en tant que moyens de chauffage desdites enceintes d'adsorption/désorption, au moins un échangeur de chaleur, de préférence au moins N-1 échangeurs de chaleur, agencés à chaque fois de manière à échanger la chaleur entre le fluide frigorifique dans le condenseur d'un étage et ledit adsorbant en zéolithe dans ladite ou chaque enceinte d'adsorption/désorption de l'étage suivant.

Selon une réalisation particulière de l'invention, le dispositif est associé à une enceinte contenant ledit produit à refroidir, ledit échangeur de chaleur terminal étant supporté à l'intérieur de ladite enceinte pour échanger la chaleur entre le fluide frigorifique dans l'évaporateur du dernier étage et le produit en phase liquide ou vapeur contenu dans ladite enceinte.

L'invention fournit également un navire méthanier équipé d'une cuve de stockage pour gaz liquéfié à laquelle est associé un dispositif selon la réalisation précitée en tant qu'unité frigorifique de re-liquéfaction.

L'invention fournit également une usine de liquéfaction de gaz comportant une enceinte de refroidissement pour le gaz à liquéfier qui est associée à un dispositif selon la réalisation précitée.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :

- la figure 1 est une représentation schématique d'une machine de refroidissement multi-étagée à trois étages pour la mise en oeuvre du procédé selon un premier mode de réalisation de l'invention,
- la figure 2 représente avec plus de détails le premier étage et une partie du deuxième étage de la machine selon un deuxième mode de réalisation de l'invention,
- la figure 3 est un diagramme thermodynamique de l'azote N2,
- la figure 4 est un schéma de principe général d'une machine frigorifique,
- la figure 5 représente un exemple typique de la courbe d'adsorption d'un adsorbant en zéolithe en fonction de la température,
- la figure 6 représente une machine frigorifique à trois étages selon un troisième mode de réalisation de l'invention,
- la figure 7 représente un cycle thermodynamique suivi par le fluide frigorifique dans chaque étage de la machine frigorifique de la figure 6,
- la figure 8 est un diagramme thermodynamique représentant les conditions de température et de pression dans les trois étages de la machine de la figure 6,
- la figure 9 représente schématiquement un échangeur de chaleur à plaque,

- les figures 10 à 12 représentent des modes de réalisation d'un dispositif de fragmentation d'un jet liquide.

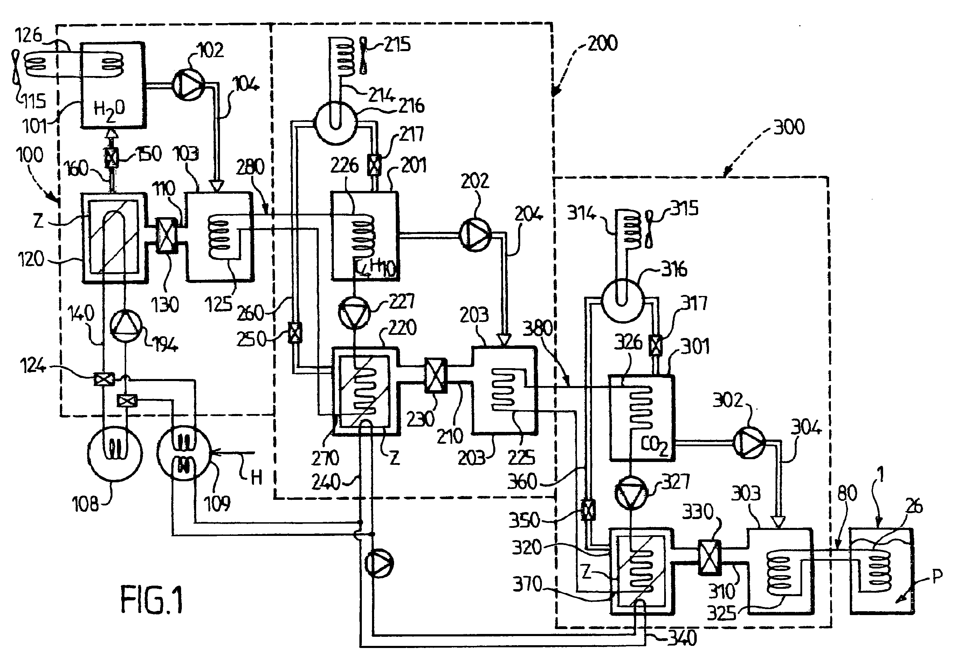

En référence à la figure 1, on décrit maintenant une machine de refroidissement multi-étagée comprenant trois étages numérotés 100, 200 et 300. Chaque étage comporte un circuit de fluide frigorifique de conception et de fonctionnement similaires, dans lequel on a créé un vide d'air et qui va être décrit plus précisément en référence au premier étage 100. Dans les étages suivants, les éléments analogues portent le même chiffre de référence augmenté d'une ou de deux centaines.

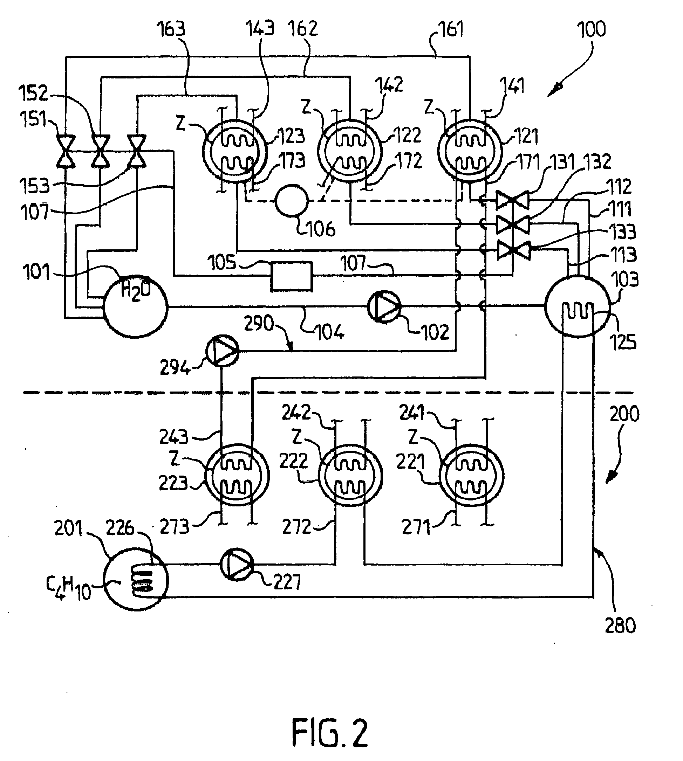

Dans le premier étage 100, le fluide frigorifique est de l'eau $H_2O$. Le circuit de fluide frigorifique comporte un condenseur 101 qui est relié par une conduite 104 munie d'une pompe de circulation 102 à un évaporateur 103. L'évaporateur 103 est relié par une conduite 110 munie d'une vanne amont 130 à une enceinte d'adsorption/désorption 120. L'enceinte 120 contient un bloc de zéolite Z en tant qu'adsorbant. L'enceinte d'adsorption/désorption 120 est reliée par une conduite 160 munie d'une vanne aval 150 au condenseur 101. Dans le condenseur 101, l'eau se trouve en phase liquide sous 1 atmosphère à une température intermédiaire inférieure à 100°C, par exemple environ 80°C. Tout le circuit de fluide frigorifique est sous vide d'air, par exemple avec une pression partielle d'air inférieure à 0,1 millibar (mbar). Pour cela, chaque enceinte d'adsorption/désorption est connectée à une pompe à vide, qui sera décrite en référence à la figure 2. Les pressions partielles obtenues peuvent être contrôlées à l'aide d'un analyseur de gaz de type connu.

Sous l'action de la pompe de circulation 102, l'eau en phase liquide est injectée à travers la conduite 104 dans l'évaporateur 103 dans lequel elle tombe en pluie. La pompe de circulation 102 peut être remplacée par une vanne lorsque l'écoulement peut être obtenu par gravité. En étant détendue dans l'évaporateur 103 de manière sensiblement adiabatique, l'eau se vaporise partiellement. La vanne amont 130 étant ouverte, la vapeur d'eau passe de l'évaporateur 103 à travers la conduite 110 jusqu'à l'enceinte d'adsorption/désorption 120 dans laquelle la vapeur d'eau est adsorbée par le bloc de zéolite Z. Cette réaction d'adsorption consomme la vapeur d'eau qui apparaît dans l'évaporateur 103, ce qui entretient en permanence la vaporisation de l'eau pour compenser la quantité de vapeur adsorbée. Cette vaporisation continue prélève de la chaleur sur le fluide, c'est-à-dire l'eau présente dans l'évaporateur 103, de sorte qu'il règne dans l'évaporateur 103 une température basse, par exemple entre -10 et -30°C. On obtient ainsi une phase de glace solide dans le fond de l'évaporateur 103. La température et la pression régnant dans l'évaporateur 103 peuvent être réglées à travers d'une part le débit de vapeur sortant à travers la vanne amont 130 et d'autre part la quantité d'eau liquide introduite depuis le condenseur 101 et la quantité de chaleur introduite par l'échangeur de chaleur 280, qui sera décrit plus bas. Du fait de l'équilibre de phases, la température dans l'évaporateur 103 est d'autant plus basse que l'on maintient une pression basse. En particulier, on pourrait aussi obtenir une phase liquide dans l'évaporateur 103 par un choix de température et de pression approprié.

L'enceinte d'adsorption/désorption 120 est munie d'un moyen de refroidissement qui sert à refroidir le bloc de zéolite Z pendant la réaction d'adsorption qui est exothermique. On maintient ainsi la température dans l'enceinte 120 à moins de 100°C. Pour cela, le moyen de refroidissement est un circuit de fluide caloporteur 140 muni d'une pompe de circulation 194 et qui est en communication avec une source froide 108, qui peut être, par exemple, de l'eau à température ambiante ou encore l'atmosphère ambiante.

Lorsque le bloc de zéolite Z a adsorbé une certaine quantité d'eau, il doit être régénéré. Pour cela, on ferme la vanne amont 130 et on ouvre la vanne aval 150. Puis on commute des vannes à trois voies 124 afin de relier le circuit de fluide caloporteur 140 à une source chaude 109 qui reçoit de la chaleur H depuis l'extérieur. La source chaude 109 peut être n'importe quelle source de chaleur à une température de préférence supérieure à 250°C. Ainsi, le circuit de fluide caloporteur 140 agit comme un moyen de chauffage qui réchauffe le bloc de zéolite Z jusqu'à, par exemple, 250°C. A cette température, le pouvoir d'adsorption de la zéolite est très faible. On prolonge la désorption jusqu'à ce qu'à peu près 90 % de la vapeur d'eau soit désorbée. Comme la conductivité thermique de la zéolithe baisse à mesure que sa teneur en eau diminue, désorber davantage d'eau demanderait un temps important, ce qui ralentirait le procédé et diminuerait donc le rendement horaire de la machine. Sous l'effet de la pression dans l'enceinte 120, La vapeur d'eau désorbée est évacuée de l'enceinte 120 à travers la conduite 160, la vanne aval 150 étant ouverte. La vapeur d'eau s'échappe dans le condenseur 101 dans lequel elle est condensée et refroidie jusqu'à la température intermédiaire de 80 à 100°C. Pour cela, le condenseur 101 est en permanence refroidi par un moyen de refroidissement 126, par exemple un échangeur de chaleur en liaison avec l'air atmosphérique. Un ventilateur 115 est prévu pour améliorer le refroidissement du condenseur 101.

Dans l'évaporateur 103, on utilise la réaction de vaporisation de l'eau pour extraire de la chaleur d'un serpentin 125 dans lequel circule un fluide caloporteur. Le serpentin 125 appartient à un échangeur de chaleur 280 qui comporte également un serpentin 226 agencé dans le condenseur 201 du deuxième étage 200 et un serpentin 270 agencé dans l'enceinte d'adsorption/désorption 220 du deuxième étage 200. L'échangeur de chaleur 280 comprend aussi une pompe de circulation 227 qui fait circuler le fluide caloporteur depuis l'évaporateur 103 dans le condenseur 201 de manière à refroidir le condenseur 201 puis dans l'enceinte d'adsorption 220 de manière à refroidir le bloc de zéolite Z en cours d'adsorption. L'échangeur de chaleur 380 remplit la même fonction entre le deuxième étage 200 et le troisième étage 300.

Dans le deuxième étage 200, le fluide frigorifique est par exemple du butane $C_4H_{10}$. La température intermé-

diaire dans le condenseur 201 est comprise entre -10 et -20°C sous une pression de 1 ou 2 atmosphères, le butane étant alors liquide. La température obtenue dans l'évaporateur 203 est comprise entre -60 et -80°C. Pour la régénération du bloc de zéolite Z dans l'enceinte d'adsorption/désorption 220, on élève la température jusqu'à une température haute de 80°C. Pour cela, on utilise un circuit de fluide caloporteur 240 relié à la source chaude 109 et/ou un autre moyen de chauffage qui sera décrit en référence à la figure 2.

A la différence de l'étage 100, l'étage 200 comporte un réservoir de refroidissement intermédiaire 216 entre la conduite 260 qui vient de l'enceinte 220 et le condenseur 201. Ce réservoir 216 est relié au condenseur 201 par l'intermédiaire d'une vanne 217. Le réservoir 216 est calorifugé lorsque le fluide désorbé est à une température inférieure à la température ambiante, pour prévenir une augmentation de pression dans le réservoir 216. Le réservoir 216 est mis en contact thermique avec l'atmosphère ambiante lorsque le fluide désorbé est à une température supérieure à la température ambiante, pour obtenir un premier refroidissement du butane en phase vapeur après la désorption et ainsi prévenir une augmentation de pression dans le réservoir 216. Dans le deuxième cas, on place le réservoir 216, qui est par exemple une bouteille de stockage de gaz en acier classique, à l'extérieur et on prévoit un échangeur de chaleur 214 ventilé par un ventilateur 215.

Pendant la régénération, le bloc de zéolithe Z dans l'enceinte 220 est chauffé, par exemple jusqu'à 80°C. La désorption du butane provoque une montée de la pression dans l'enceinte 220 et donc un écoulement du butane en phase vapeur à travers la conduite 260 jusque dans le réservoir 216. Lorsque le butane subit un refroidissement, ce refroidissement entretient l'aspiration du butane depuis l'enceinte 220. Dans cette étape, la température dans le réservoir 216 dépend des conditions dans lesquelles est réalisée la désorption, c'est-à-dire notamment de la pression dans le réservoir 216. Par exemple, on peut prévoir une pression de 15 bar. Plus on laisse monter la pression dans le réservoir 216, plus la température y est élevée. Depuis le réservoir 216, le butane en phase vapeur est ensuite détendu à travers la vanne 217 dans le condenseur 201 pour y être davantage refroidi et liquéfié à une pression proche de la pression normale.

L'étage 300 est similaire à l'étage 200. Dans le troisième étage 300, le fluide frigorifique est du dioxyde de carbone $CO_2$. La température intermédiaire dans le condenseur 301 est comprise entre -60 et -70°C, le dioxyde de carbone étant alors liquide. La température basse dans l'évaporateur 303 est comprise entre -120 et -130°C. Pour la régénération du bloc de zéolite Z dans l'enceinte d'adsorption/désorption 320, on élève la température jusqu'à une température haute comprise entre -10 et -20°C. Pour cela, on utilise des moyens de chauffage du même type que dans le deuxième étage 200, à savoir un circuit de fluide caloporteur 340 relié à la source chaude 109 ou un échangeur de chaleur associé à une enceinte d'adsorption/désorption de l'étage précédent, comme il sera expliqué en référence à la figure 2. Lors de la régénération, pour que le refroidissement à température ambiante dans le réservoir 316 soit effectif, il faut bien entendu que la température dans le réservoir 316 soit supérieure à la température ambiante, ce qui suppose d'avoir une assez haute pression dans le réservoir 316.

Un autre possibilité est de réaliser la désorption à plus basse pression, de manière à obtenir une température de vapeur dans le réservoir 316 (respectivement 216) qui soit inférieure à la température ambiante. Dans ce cas, l'échangeur 314 (respectivement 214) est supprimé. Au contraire, le réservoir 316 (respectivement 216) est calorifugé dans ce cas. Cette variante peut être préférée, en fonction des fluides frigorifiques utilisés, chaque fois que la pression dans le réservoir qui permettrait d'obtenir une température supérieure à la température ambiante est si élevée qu'elle entraîne des contraintes technologiques inacceptables.

L'évaporateur du dernier étage, c'est-à-dire l'évaporateur 303 du troisième étage 300 dans l'exemple de réalisation représenté sur la figure 1, est pourvu de moyens d'utilisation du froid produit par la machine multi-étagée. Pour cela, un échangeur de chaleur terminal 80 est agencé entre l'évaporateur 303 du troisième étage 300 et une enceinte 1 contenant le produit P à refroidir. L'échangeur de chaleur 80 comporte un circuit de fluide caloporteur avec un serpentin 325 dans l'évaporateur 303 dans lequel le fluide caloporteur se refroidit et un serpentin 26 supporté dans l'enceinte 1 et dans lequel le fluide caloporteur se réchauffe en refroidissant le produit P. Par exemple, l'enceinte 1 est une cuve de stockage d'un gaz liquéfié qui doit être refroidi pour compenser les pertes thermiques à travers les parois de l'enceinte 1. En fonction de l'application, il est aussi possible d'utiliser du froid prélevé dans les évaporateurs des autres étages de la machine, en prévoyant des échangeurs de chaleur correspondants.

Avant le démarrage de la machine, à l'état initial, les fluides frigorifiques sont stockés à température ambiante dans les réservoirs 101, 216 et 316 respectivement. On démarre successivement les étages 100, 200 et 300.

Telle qu'elle est représentée sur la figure 1, la machine multi-étagée ne peut pas fournir de refroidissement pendant la phase dans laquelle on régénère les blocs de zéolite Z. Pour remédier à cet inconvénient, en référence à la figure 2, on décrit maintenant un deuxième mode de réalisation de la machine, dans laquelle au moins deux, de préférence trois, enceintes d'adsorption/désorption sont prévues dans chaque étage. Sur la figure 2, les éléments identiques ou similaires à ceux du premier mode de réalisation sont désignés par les mêmes chiffres de référence.

Sur la figure 2, dans la représentation détaillée du premier étage 100, l'enceinte d'adsorption/désorption 120 et les vannes amont et aval correspondantes sont remplacées par trois enceintes d'adsorption/désorption 121, 122 et 123 qui sont respectivement reliées au condenseur 101 par l'intermédiaire de conduites 161 à 163 munies de vannes aval 151 à 153. Les enceintes 121 à 123 sont également reliées à l'évaporateur 103 par l'intermédiaire de conduites 111 à 113 munies de vannes amont 131 à 133. Les vannes 131 à 133 et 151 à 153 sont des électrovannes commandées par une unité de commande 105 par l'intermédiaire de lignes de commande 107. L'unité de commande 105 est programmée de manière à effectuer un cycle de temps masqué, dans lequel simultanément :

- une enceinte, par exemple 121, est en cours d'adsorption, la vanne amont associée étant ouverte et la vanne aval associée étant fermée,
- une autre enceinte, par exemple 123, est en cours de régénération, la vanne amont étant fermée et la vanne aval étant ouverte,
- et la troisième enceinte, par exemple 122, est en cours de refroidissement, la vanne amont et la vanne aval étant fermées.

Les vannes sont ainsi commutées périodiquement de manière que chaque enceinte effectue successivement l'étape d'adsorption, l'étape de régénération et l'étape de refroidissement après régénération. Les étapes ne sont pas nécessairement de mêmes durées, de sorte que les changements d'étapes ne sont pas nécessairement simultanés dans toutes les enceintes d'un étage. Pour la réalisation du cycle de temps masqué, il est préférable de réaliser la commutation entre les enceintes de manière synchrone dans tous les étages, par simplicité.

Si seulement deux enceintes sont prévues, l'étape de régénération et l'étape de refroidissement d'une enceinte sont effectuées pendant l'étape d'adsorption de l'autre enceinte. De cette manière, à tout instant, il y a au moins une enceinte qui effectue l'adsorption dans chaque étage.

Chaque enceinte 121 à 123 est munie d'un serpentin de refroidissement 171 à 173 relié à une source froide et d'un serpentin de chauffage 141 à 143 relié à une source chaude. Par des circulations de fluides caloporteurs, on assure ainsi un refroidissement du bloc de zéolite Z pendant l'étape d'adsorption ainsi que pendant l'étape de refroidissement après régénération, mais on assure aussi un chauffage du bloc de zéolite pendant l'étape de régénération.

En variante, comme représenté à la figure 1, au chiffre 140, un unique circuit de fluide caloporteur pourrait être utilisé comme moyen de refroidissement et comme moyen de chauffage en étant relié sélectivement soit à une source chaude, soit à une source froide. A cause de l'inertie thermique qu'il entraîne, un tel montage est cependant moins avantageux.

Une pompe à vide 106 est reliée à chaque enceinte d'adsorption/désorption 121 à 123 de manière à maintenir le vide d'air. La pompe à vide 106 sert à compenser les défauts d'étanchéité du circuit de fluide frigorifique ainsi qu'à aspirer des corps incondensables qui étaient initialement dissous dans l'eau, par exemple de l'oxygène et qui risqueraient de rester dans l'enceinte d'adsorption car ils ne sont pas adsorbables par la zéolite. Après un ou deux cycles de refroidissement, l'eau sera exempte de tels incondensables.

L'échangeur de chaleur 280 a été représenté sur la figure 2 relié au serpentin de refroidissement 272 de l'enceinte d'adsorption/désorption 222. Toutefois, c'est chacune des enceintes d'adsorption 221 à 223 qui doit être refroidie pendant l'étape d'adsorption et pendant l'étape de refroidissement après régénération. Pour cela, on peut prévoir un échangeur de chaleur distinct pour chacune des enceintes d'adsorption/ désorption 221 à 223 afin d'échanger la chaleur avec l'évaporateur 103. En variante, l'échangeur de chaleur 280 sera muni de vannes à plusieurs voies afin de faire circuler le fluide caloporteur de refroidissement de manière sélective dans un ou plusieurs des serpentins de refroidissement 271 à 273. Selon encore une autre variante, il est possible de prévoir au moins deux échangeurs de chaleur séparés pour échanger la chaleur, d'une part, entre l'évaporateur 103 et le condenseur 201 et, d'autre part, entre l'évaporateur 103 et les enceintes d'adsorption 221 à 223.

Comme moyen de chauffage des blocs de zéolite Z dans le deuxième étage 200, on a représenté un échangeur de chaleur 290 qui permet de faire circuler un fluide caloporteur dans un serpentin de refroidissement 171 de l'enceinte 121 du premier étage, qui est en train d'effectuer l'étape d'adsorption et dans laquelle le fluide caloporteur se réchauffe jusqu'à 80 à 100°C, puis dans le serpentin de chauffage 243 de l'enceinte d'adsorption/désorption 223, qui est en train d'effectuer l'étape de régénération. Ainsi, chaque enceinte d'adsorption/désorption du deuxième étage peut être chauffée pour sa régénération jusqu'à 80°C. Encore une fois, c'est chacune des enceintes 221 à 223 qui doit, lorsqu'elle effectue sa propre étape de régénération, échanger de la chaleur avec l'enceinte 121 ou 122 ou 123 qui est en train d'effectuer simultanément sa propre étape d'adsorption. Pour cela, on peut prévoir plusieurs échangeurs de chaleur analogues à l'échangeur 290 ou bien prévoir des vannes à plusieurs voies commutables pour relier sélectivement l'un ou l'autre des serpentins de refroidissement 171 à 173 à l'un ou l'autre des serpentins de chauffage 241 à 243. La circulation de fluide caloporteur dans l'échangeur de chaleur 290 est assurée par une pompe 294.

En variante, ou de manière complémentaire, on peut prévoir un échangeur de chaleur entre les enceintes d'adsorption/désorption 221 à 223 de l'étage 200 et le condenseur 101 de l'étage 100, afin d'utiliser la chaleur de condensation de l'eau pour régénérer la zéolithe dans l'étage 200. Toutefois, il est nécessaire de bien contrôler la température de condensation dans le condenseur 101 pour pouvoir procéder ainsi.

Des échangeurs de chaleur similaires aux échangeurs 280 et 290 représentés sur la figures 2 sont réalisés entre tous les étages successifs de la machine, de sorte que chaque étage produit le froid nécessaire à réaliser la condensation du fluide frigorifique dans l'étage suivant, le refroidissement de la zéolithe en phase d'adsorption dans l'étage suivant, et la chaleur nécessaire à réaliser la désorption du frigorifique dans l'étage suivant, ou du moins une partie de cette chaleur. Ainsi, dans un mode de réalisation préféré, seul l'étage 100 nécessite un apport de chaleur extérieur H au moyen de la source chaude 109. Cependant, il est aussi possible d'utiliser de la chaleur extérieure H pour la régénération dans tous les étages.

Sur la figure 1, la machine comporte trois étages en cascade. Cependant, il est possible de prévoir moins ou plus d'étages avec, à chaque étage, une température haute, une température intermédiaire et une température basse choisie inférieure à la température correspondante dans l'étage précédent. Par exemple, on peut prévoir un quatrième étage avec de l'éthylène comme fluide frigorifique, un cinquième étage avec du méthane comme fluide frigorifique, un sixième étage avec de l'azote ou l'argon comme fluide frigorifique et un septième étage avec du néon comme fluide frigorifique. La température basse dans le dernier étage pourrait alors être proche de 10 K.

Le tableau 1 présente des propriétés thermodynamiques d'un certains nombre de corps pouvant servir de fluide frigorifique dans la machine de refroidissement multi-étagée. La température d'ébullition de chacun est donnée pour plusieurs valeurs de pression pour illustrer la plage de températures pouvant être obtenue dans l'évaporateur de chaque étage, en fonction du choix du fluide frigorifique. Dans le premier étage, on peut également utiliser un mélange eau glycol pour obtenir une température de fusion plus haute. Ainsi, on peut éviter la formation de glace dans l'évaporateur 103. La zéolithe Z dans les enceintes 121 à 123 sera alors choisie dans un calibre qui empêche toute adsorption du glycol, de manière que celui-ci reste dans l'évaporateur 103.

La zéolithe est disponible sous de nombreuses formes différant les unes des autres par leur structure cristalline ou la taille des pores. De manière générale, on choisit pour chaque cycle la forme de zéolithe la mieux adaptée en fonction du fluide frigorifique correspondant.

Dans un mode de réalisation particulier, on choisit de la zéolithe ayant une structure particulière permettant d'accélérer les réactions d'adsorption et de désorption. Une telle structure est décrite dans EP-A-470886. De la zéolithe sous forme granulaire, avec un diamètre par exemple de 3 mm, est déposée par immersion sur une pièce métallique sur laquelle ont été façonnées des saillies délimitant des espaces interstitiels. La zéolithe remplit ces espaces et on la fixe par frittage. Avec une telle structure rapide, on peut faire fonctionner un étage de la machine, par exemple l'étage 100, en ne prévoyant qu'une seule enceinte d'adsorption/désorption et en effectuant les étapes d'adsorption et de désorption selon une alternance rapide, par exemple toute les minutes.

La machine de refroidissement décrite ci-dessus présente de nombreuses applications. Par exemple, elle peut être utilisée comme unité de refroidissement associée à une cuve de transport de gaz liquéfié dans un navire méthanier. Pour cela, le serpentin 26 de l'échangeur de chaleur terminal 80 sera suspendu dans la cuve. Pour la réalisation d'un tel agencement, on se référera à la demande FR 2785034A1. La température dans l'échangeur de chaleur terminal 80 devra être inférieure ou égale à -164°C pour liquéfier du méthane à pression normale. Pour cela, il faut bien sûr prévoir plus d'étages que ceux représentés sur la figure 1, en ajoutant par exemple un étage avec l'éthylène comme fluide frigorifique et un étage avec le méthane comme fluide frigorifique. Pour ce type d'application, on évite d'utiliser l'oxygène comme fluide frigorifique, du fait des risques d'explosion en cas de fuite.

La machine multi-étagée peut également servir à effectuer le refroidissement isobare d'un corps gazeux qu'on souhaite liquéfier dans une usine de liquéfaction. Pour cela, l'enceinte 1 est utilisée comme enceinte de liquéfaction du gaz. La machine multi-étagée peut être appliquée à la liquéfaction de l'air ou de ses constituants, y compris les gaz rares. La courbe C sur la figure 3 représente le chemin thermodynamique suivi par l'azote dans un tel procédé de liquéfaction, à partir de l'état initial représenté par le point A.

Un Chemin analogue peut être tracé sur le diagramme thermodynamique température-entropie d'un autre gaz, notamment le méthane. De tels diagrammes sont disponibles dans l'ouvrage de référence « l'encyclopédie des gaz », ISBN 0-444-41492-4 (1976-2002). Par exemple, on peut obtenir un débit de méthane liquéfié d'environ 20kg/min avec 1 t de zéolithe dans chaque enceinte d'adsorption/désorption.

Les circuits de fluide caloporteur décrits ci-dessus ne constituent qu'un exemple illustratif d'échangeur de chaleur. De nombreux autres types d'échangeurs peuvent être utilisés pour la mise en oeuvre du procédé selon l'invention, notamment sans utiliser de fluide caloporteur intermédiaire.

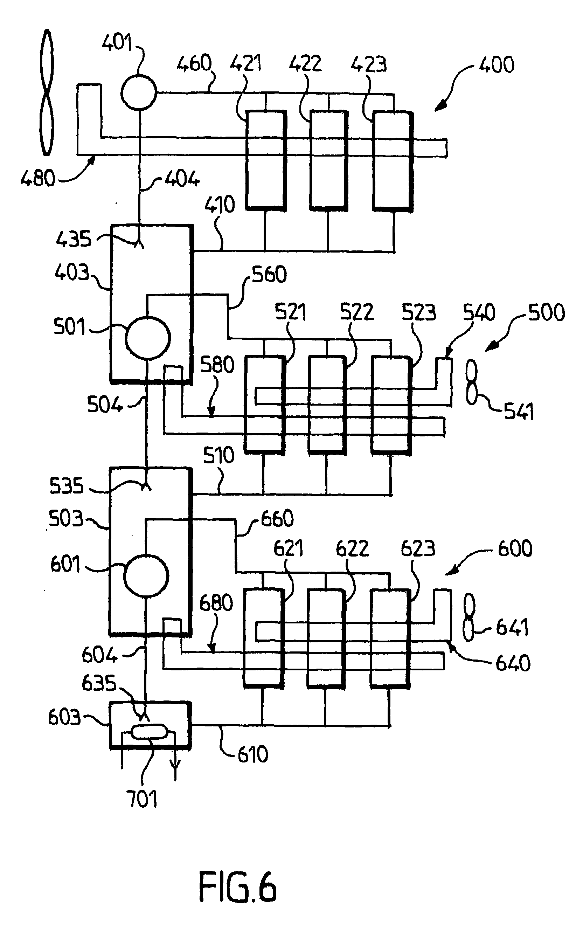

En référence à la figure 6, on décrit maintenant un autre mode de réalisation d'une machine frigorifique à étages. Les éléments identiques ou analogues à ceux du premier mode de réalisation portent le même chiffre de référence augmenté de 300.

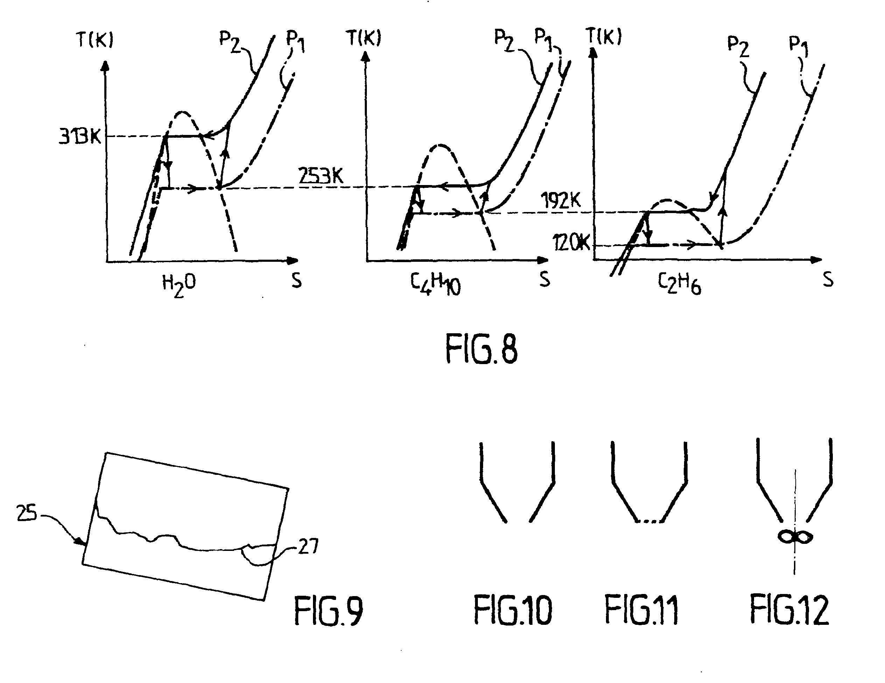

Dans chacun des étages, un fluide frigorifique suit un cycle thermodynamique dont le principe est représenté sur la figure 7, qui est un diagramme général pouvant être appliqué à différents fluides.

Sur la figure 7, l'abscisse représente l'entropie massique s et l'ordonnée représente la température T. La ligne 37 représente la courbe de changement phase liquide/vapeur et la ligne 36 représente la courbe isobare critique du fluide.

On a aussi représenté deux courbes isobares correspondant à deux pressions $P_1 < P_2$ choisies entre le point triple et la pression critique du fluide. Le cycle est un cycle fermé représenté par la courbe 38.

Le fluide en phase liquide est évaporé de manière isobare à la pression $P_1$ et la température $T_1$ par mise en communication avec un adsorbant en zéolithe que l'on maintient à une température d'adsorption $T_{ads}$ pour adsorber la phase vapeur. Après adsorption, on chauffe la zéolithe jusqu'à une température de désorption $T_{des} < T_{ads}$. La vapeur désorbée subit une compression isochore jusqu'à la pression $P_2$. Le fluide en phase vapeur est condensé de manière isobare à la pression $P_2$ et la température $T_2$. Enfin, la pression de la phase liquide est réduite brutalement de $P_2$ à $P_1$, par une perte de charge, ce qui vaporise une partie du fluide.

Dans les étages successifs, les fluides et les pressions sont choisis de manière que l'évaporation du fluide dans un étage de rang n prélève la chaleur nécessaire à la condensation du fluide dans l'étage suivant de rang n+1. La condition de fonctionnement est donc $T_1(n) < T_2(n+1)$.

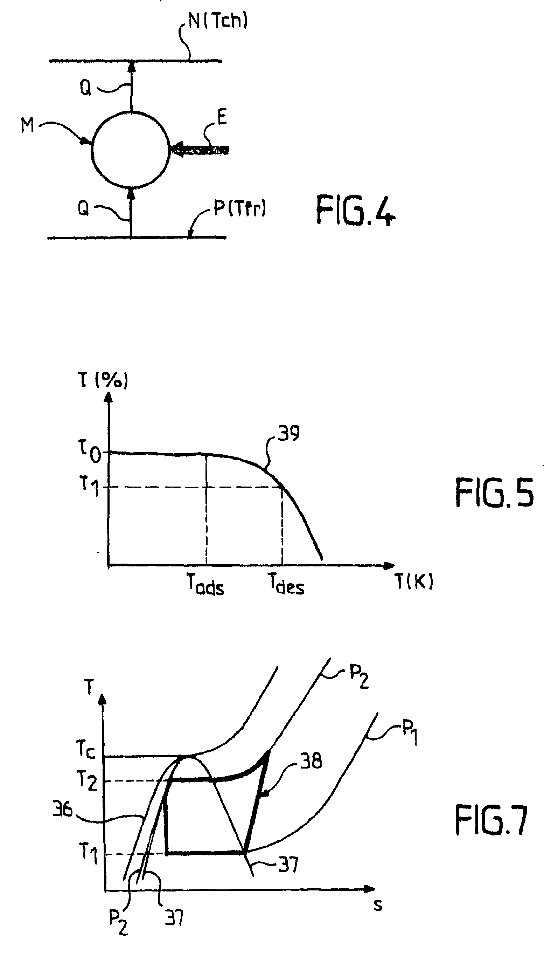

La figure 5 représente un exemple d'une courbe d'adsorption 39 traduisant le taux d'absorption $\tau$ (en pourcentage massique de fluide adsorbé par rapport à la quantité d'adsorbant) en fonction de la température T. En dessous de la température d'adsorption $T_{ads}$, le taux est sensiblement égal au taux de saturation $\tau_0$. Pour réduire le taux d'adsorption jusqu'à un niveau $\tau_1 < \tau_0$, on doit élever la température de l'adsorbant jusqu'à une température de désorption correspondante $T_{des}$. En pratique, la courbe 39 dépend du couple fluide/adsorbant. Dans tous les étages, la fonction des réacteurs d'adsorption est de fournir deux niveaux de pression de vapeur correspondant à deux niveaux de température distincts.

On décrit ensemble les trois étages 400, 500 et 600 dont la structure et le fonctionnement sont similaires. Dans le condenseur 401 (respectivement 501, 601), le fluide est condensé à la pression haute du cycle $P_1$ grâce à une extraction de la chaleur de condensation. Le fluide condensé s'écoule par gravité à travers une conduite 404 (respectivement 504, 604) jusque dans l'évaporateur 403 (respectivement 503, 603) en subissant une perte de charge jusqu'à la pression basse du cycle $P_2$. L'écoulement dans l'évaporateur s'effectue à chaque fois naturellement. Il suffit d'en réguler le débit pour adapter les capacités d'adsorption et d'évaporation aux conditions de température et pression voulues dans l'évaporateur. L'évaporateur est calorifugé.

Le condenseur 501 (respectivement 601) de l'étage suivant est ici réalisé sous la forme de plaques creuses d'échangeur de chaleur agencées dans l'évaporateur 403 (respectivement 503) et sur lesquelles on fait ruisseler le liquide introduit dans l'évaporateur, afin de réaliser simultanément l'évaporation de ce liquide et la condensation du fluide frigorifique dans le condenseur. La figure 9 représente schématiquement une telle plaque d'échangeur 25 sur laquelle un film de liquide 27 est en cours d'évaporation.

Pour accroître la cinétique d'évaporation, on peut également diffuser le liquide introduit dans l'évaporateur à l'aide d'un dispositif de fragmentation du jet 435 (respectivement 535, 635) agencé à l'extrémité de la conduite 404 (respectivement 504, 604). On connaît de tels dispositifs de plusieurs types, par exemple à orifice unique (Fig. 10), à orifices multiples (Fig. 11) ou avec hélice sur jet (Fig. 12), qui sont développés par exemple pour l'alimentation en fuel des brûleurs. il convient ici de les chauffer afin d'éviter leur obturation.

Une conduite 410 (respectivement 510, 610) relie l'évaporateur à trois réacteurs 421-423 (respectivement 521-523, 621-623) contenant un adsorbant en zéolithe. Des vannes de sectionnement non représentées (par exemples des clapets anti-retour) permettant d'isoler individuellement les réacteurs de l'évaporateur et du condenseur, de manière qu'à tout instant un des réacteurs au moins soit relié à l'évaporateur et refroidi à une température d'adsorption adéquate, $T_{ads}$, afin de réaliser l'adsorption de la vapeur (réaction exothermique) formée dans l'évaporateur, et un des réacteurs au moins soit relié au condenseur et réchauffé à une température de désorption adéquate $T_{des} > T_{ads}$, afin de relâcher la vapeur (réaction endothermique) à la pression haute du cycle vers le condenseur.

On choisit de préférence une pression haute $P_1$ peu élevée, par exemple inférieure à 5 bar absolus, voire inférieure à 3 bar absolus, afin de limiter le dimensionnement des parois et donc le poids et le coût de la machine.

En effet, si l'on assimile le condenseur à une enveloppe sphérique de rayon R, en fonction de l'écart de pression $\Delta P$ entre intérieur et extérieur, l'épaisseur e est donnée par l'expression :

$$e = \frac{\Delta P R}{2\sigma_{adm}}$$

Pour une enveloppe cylindrique de rayon R, le diviseur 2 est supprimé. En prenant une enceinte sphérique de rayon 3m, pour une contrainte maximale admissible $\sigma_{adm} = 240$ MPa, et sans coefficient de sécurité, l'épaisseur est :

| $\Delta P$(bar) | 0,5 | 1 | 1,5 | 2 | 3 | 5 | 10 | 15 | 20 |
|---|---|---|---|---|---|---|---|---|---|
| e (mm) | 0,3 | 0,6 | 0,9 | 1,3 | 1,9 | 3,1 | 6,3 | 9,4 | 12,5 |

(suite)

| M(kg) | 276 | S51 | 827 | 1103 | 1654 | 2757 | 5513 | 8270 | 11027 |
|---|---|---|---|---|---|---|---|---|---|

Pour ce type d'installation un coefficient de sécurité de 5 semble le plus vraisemblable. La masse augmente avec le même facteur.

Exemple 1

On réalise une machine ayant jusqu'à 5 étages selon la structure représentée sur la Fig. 6. Le tableau 2 donne pour chaque étage une liste de corps utilisable comme fluide frigorifique, la température haute $T_2$ atteinte dans le condenseur et la température basse $T_1$ atteinte dans l'évaporateur.
Les fluides sont classés en fonction de leurs températures d'équilibre aux pressions de 1 bar et 0,5 kPa.

Exemple 2

On réalise une machine de refroidissement à trois étages, selon la structure représentée sur la figure 6. Les paramètres de chaque étage figurent dans le tableau 3.
La figure 8 représente plus en détail les cycles des trois fluides, dans une représentation analogue à la figure 7.
Cette machine peut être utilisée pour le refroidissement d'un produit P à -150°C environ, par exemple en faisant circuler ce produit dans un échangeur de chaleur 701 logé dans l'évaporateur 603 du dernier étage. Pour le refroidissement des réacteurs d'adsorption 421-423, en phase d'adsorption, on prévoit un échangeur de chaleur 480 permettant d'évacuer la chaleur vers l'air atmosphérique ou vers une masse d'eau à température ambiante. Pour la régénération de ces réacteurs, on prévoit une source de chaleur à 250°C, comme décrit plus haut en référence à la figure 1.
Dans les étages à butane et à éthane, on effectue le refroidissement des réacteurs en phase d'adsorption grâce à un échangeur de chaleur 580 (respectivement 680) pour évacuer la chaleur vers l'évaporateur 403 (respectivement 503) de l'étage précédent. Bien que les échangeurs de chaleur 480, 580 et 680 soient représentés schématiquement, ils comportent les vannes et les contournements nécessaires pour permettre de refroidir sélectivement chacun des réacteurs.
Dans les étages à butane et à éthane, on prévoit également un échangeur de chaleur 540 (respectivement 640) agencé pour échanger la chaleur entre l'air atmosphérique, dont la convection est de préférence forcée à l'aide d'un ventilateur 541 (respectivement 641), et l'adsorbant en zéolithe en vue de sa régénération à la température ambiante ou à une température légèrement supérieure. Si la température de régénération est supérieure à l'ambiante, on peut effectuer en plus un échange de chaleur avec le condenseur 401 de l'étage à eau pour apporter le complément de chaleur à la zéolithe. Ici aussi, les vannes et contournements permettant de réchauffer sélectivement chacun des réacteurs 521-523 (respectivement 621-623) sont prévus. De cette manière, la fourniture d'énergie extérieure à la machine n'est effectuée que sur le premier étage, lors de la régénération des réacteurs 421-423.

Exemple 3

Une machine de liquéfaction du méthane à pression normale comporte quatre étages dont les trois premiers sont similaires à l'exemple 2. Le tableau 4 donne les paramètres de chaque étage. Un étage dont le fluide est le méthane est ajouté en se conformant à la structure présentée sur la figure 6.
Sur la base de taux d'adsorption de 10 %, d'un temps de cycle sur chaque étage de 1 heure, d'une chaleur d'adsorption 1 fois et demi la chaleur latente, et de trois réacteurs par étage, on peut prévoir les températures d'adsorption et de désorption suivantes :

| Fluide | Eau | Butane | Ethane | Méthane |
|---|---|---|---|---|
| Tads | 80°C | -30°C | -30°C | -30°C |
| Tdes | 180°C | 70°C | 70°C | 70°C |

Dans cette configuration, on peut modifier les échangeurs 580 et 680 de manière à refroidir les réacteurs en cours d'adsorption des étages inférieurs en utilisant le froid produit dans l'évaporateur 403 de l'étage à eau. Si nécessaire, on peut aussi utiliser pour cela le froid produit dans l'évaporateur 503 de l'étage à butane.
On prévoit de plus des échangeurs de chaleur non représentés permettant de régénérer les réacteurs 521-523, 621-623, etc. des étages inférieurs à l'aide de la chaleur d'adsorption produite dans les réacteurs 421-423 de l'étage à eau, combinée éventuellement à la chaleur de condensation de l'eau qui est libérée dans le condenseur 401. Ainsi, seuls les réacteurs de l'étage à eau consomment de l'énergie extérieure pour leur régénération, sous la forme par exemple de chaleur à 250°C.

Exemple 4

La machine de l'exemple 3 est dimensionnée pour former une installation de re-liquéfaction du gaz d'évaporation embarquée sur un méthanier.

Pour une cargaison de 125 000 m$^3$ de méthane liquide et un taux d'évaporation de 0,15 %/j, la puissance frigorifique utile requise est estimée à environ 580 kW. Pour cela, on prévoit les ordres de grandeur suivants :

| Fluide | Eau | Butane | Ethane | Méthane |
|---|---|---|---|---|
| Masse adsorbant | 13 t | 18 t | 15 t | 14 t |
| Chaleur dégagée | | 1,1 MJ | 1,1 MJ | 1,1 MJ |

La masse totale de l'installation est de l'ordre de 200 t et sa consommation journalière de 2,7 t/j en méthane. Ces masses sont proportionnelles au temps de cycle.

Exemple 5

La machine de l'exemple 3 est dimensionnée pour assurer le chargement d'un méthanier en gaz liquéfié à forte teneur en méthane en 24 h à partir de gaz à 30°C, pour une cargaison de 125 000 m$^3$. La puissance frigorifique utile requise est estimée à 630 MW. Pour cela, on prévoit les masses d'adsorbant suivantes :

| Fluide | Eau | Butane | Ethane | Méthane |
|---|---|---|---|---|
| Masse adsorbant | 14 157 t | 19 602 t | 16 335 t | 15 246 t |

La masse totale de l'installation est de l'ordre de 217 800 t et sa consommation journalière de 2 940 t/j en méthane.

La figure 4 est un diagramme de principe général d'une machine frigorifique M. En fonctionnement, la machine frigorifique M transfère de la chaleur Q depuis une source froide vers une source chaude N dont la température $T_{ch}$ est supérieure à celle de la source froide $T_{fr}$. Pour cela, la machine M consomme de l'énergie E. Le rendement de la machine est défini par le rapport Q/E. Dans les modes de réalisation décrits ci-dessus, la source froide est constituée par un produit P à refroidir et la source chaude est de préférence constituée par l'atmosphère ambiante ou la mer.

Une manière d'affecter favorablement ce rendement est de limiter le travail de compression, en limitant la pression haute des cycles, c'est-à-dire la pression de condensation, à une valeur inférieure à quelques bars, comme dans les exemples 2 et 3. De plus, compte tenu de l'écart de pression limité à environ 1 bar dans chaque étage, la vapeur obtenue lors de la régénération de la zéolithe est légèrement surchauffée et ne nécessite aucun sous refroidissement, puisqu'une compression isochore de 1 bar produit un échauffement de seulement 60°C environ.

Dans les applications à haute puissance frigorifique, il est préférable d'utiliser des fluides à chaleur latente de vaporisation/condensation élevée, afin de limiter les débits de fluide frigorifique et la masse des adsorbants. Le tableau 5 présente des caractéristiques physiques de différents corps utilisables comme fluides frigorifiques dans les procédés selon l'invention : pression critique Pc, température critique Tc, température du point triple et chaleur latente L, qui sert de paramètre de classement des fluides dans ce tableau.

Tableau 1 : Températures d'ébullition (°C) de plusieurs corps utilisables comme fluides frigorifiques à différentes pressions

| Corps | P=1 Torr (1,33.10$^2$ Pa) | P= 10 Torr (1,33.10$^3$ Pa) | P= 1 atm (1,013.10$^5$ Pa) | P=2 atm (2, 026.10$^5$ Pa) |
|---|---|---|---|---|
| Ammoniac $NH_3$ | -109 | -92 | -33 | -18,7 |
| Butane $C_4H_{10}$ | -101 | -78 | -0,5 | 18,8 |
| Méthane $CH_4$ | -205 | -195 | -164 | -152 |
| Azote $N_2$ | -226 | -219 | -196 | -189 |

(suite)

| Corps | P=1 Torr (1,33.10$^2$ Pa) | P= 10 Torr (1,33.10$^3$ Pa) | P= 1 atm (1,013.10$^5$ Pa) | P=2 atm (2, 026.10$^5$ Pa) |
|---|---|---|---|---|
| Dioxyde de carbone $CO_2$ | -134 | -119 | -78 | -69 |
| Propane $C_3H_8$ | -129 | -108 | -42 | -25 |
| Néon Ne | -257 | -254 | -246 | -243 |
| Xénon Xe | -168 | | -108 | |
| Argon Ar | -218 | -210 | -185 | -179 |
| Acétylène $C_2H_2$ | -143 | -128 | -84 | -71 |
| éthylène $C_2H_4$ | -168 | -153 | -104 | |
| Krypton Kr | -199 | -187 | -152 | |
| éthane $C_2H_6$ | -183 | -159 | -88 | -75 |

Tableau 2

| Etage | Fluide | $T_2$ | $T_1$ |
|---|---|---|---|
| 1$^{er}$ | eau, alcools | ambiante | jusqu'à -40°C |
| 2$^e$ | butane, butadiène, propadiène, propane | -20°C | -80°C |
| 3$^e$ | éthane, $CO_2$ protoxyde d'azote | -80°C | -150°C |
| 4$^e$ | méthane, krypton | -150°C | -200°C |
| 5$^e$ | néon, oxygène, hélium, azote, argon, CO | -200°C | -260°C |

Tableau 3

| Etage | Fluide | $P_1$ | $T_1$ | $P_2$ | $T_2$ |
|---|---|---|---|---|---|
| 400 | eau | 0,1032 kPa | -20°C | 7,3 kPa | 40°C |
| 500 | butane | 1 kPa | -81°C | 45 kPa | -20°C |
| 600 | éthane | 0,1 kPa | -153°C | 150 kPa | -81°C |

Tableau 4

| Fluide | Eau | n-Butane | Ethane | Méthane |
|---|---|---|---|---|
| $P_2$ (bar) | 0,8 | 1 | 1 | 3 |
| $T_2$ (°C) | 80 | -5 | -88 | -148 |
| $P_1$ (kPa) | 0,5 | 0,5 | 0,5 | 20 |
| $T_1$ (°C) | -30 | -88 | -155 | -182 |

Tableau 5

| | Pc(bar) | Tc(°C) | Triple (°C) | L (kJ/kg) |
|---|---|---|---|---|
| EAU | 221 | 376 | 0 | 2500 |
| CO2 | 74 | 31 | -56,6 | 571 |

(suite)

|  | Pc(bar) | Tc(°C) | Triple (°C) | L (kJ/kg) |
|---|---|---|---|---|
| METHANE | 46 | -82,2 | -182,5 | 510 |
| ETHANE | 49 | 32,2 | -183,3 | 489 |
| ETHYLENE | 50 | 9,5 | -169 | 482 |
| HYDROGENE | 13 | -240 | -259,3 | 454,3 |
| PROPANE | 42,5 | 96,6 | -187,7 | 425,3 |
| BUTANE | 38 | 152 | -125 | 386 |
| AZOTE | 34 | -147 | -210 | 198 |
| KRYPTON | 55 | -63,8 | -157 | 107,8 |
| XENON | 58,4 | 16,5 | -111,8 | 96,29 |
| NEON | 27,56 | -228,8 | -249 | 88,7 |
| HELIUM | 2,2 | -268 | -272,2 | 20 |

**Revendications**

**1.** Procédé de refroidissement d'un produit (P) comportant N cycles d'adsorption/désorption ordonnés (100, 200, 300, 400, 500, 600) sous vide d'air, N étant un entier supérieur à 1, chaque cycle comportant les étapes consistant à :

- extraire de la chaleur d'un fluide frigorifique en phase vapeur dans un condenseur (101, 201, 301, 401, 501, 601) à une première pression ($P_2$) inférieure à la pression critique dudit fluide pour condenser ledit fluide frigorifique,
- introduire ledit fluide frigorifique en phase liquide dans un évaporateur (103, 203, 303, 403, 503, 603) à une deuxième pression ($P_1$) inférieure à la première pression pour vaporiser une partie dudit fluide frigorifique et refroidir l'autre partie dudit fluide frigorifique jusqu'à une température de vaporisation ($T_1$) dudit fluide frigorifique à ladite deuxième pression, ladite température de vaporisation étant décroissante d'un cycle au cycle suivant, lesdites première et deuxième pressions étant choisies dans chaque cycle de manière que ladite température de vaporisation ($T_1$) dans un cycle soit à chaque fois inférieure à la température de condensation ($T_2$) du fluide frigorifique dans le cycle suivant à la première pression dudit cycle suivant,
- apporter de la chaleur à la partie liquide dudit fluide frigorifique à ladite deuxième pression dans ledit évaporateur pour évaporer ledit fluide frigorifique,
- adsorber ledit fluide frigorifique en phase vapeur dans au moins une enceinte d'adsorption/désorption (120, 220, 320, 421-423, 521-523, 621-623) reliée audit évaporateur et contenant un adsorbant en zéolithe (Z),
- après qu'une quantité dudit fluide frigorifique a été adsorbée dans ledit adsorbant en zéolithe, régénérer ledit adsorbant en zéolithe par chauffage pour désorber ladite quantité de fluide frigorifique en phase vapeur,
- renvoyer ladite quantité de fluide frigorifique en phase vapeur vers ledit condenseur,

ledit procédé comportant en outre les étapes consistant à :

effectuer N-1 échanges de chaleur à chaque fois entre le fluide frigorifique dans l'évaporateur (103, 203, 403, 503) d'un cycle et le fluide frigorifique dans le condenseur (201, 301, 501, 601) du cycle suivant dans l'ordre des cycles pour réaliser ainsi ledit apport de chaleur dans ledit évaporateur et ladite extraction de chaleur dans ledit condenseur,
et refroidir ledit produit par échange de chaleur avec le fluide frigorifique au moins dans l'évaporateur (303, 603) du dernier cycle.

**2.** Procédé selon la revendication 1, **caractérisé par le fait que** ladite extraction de chaleur dans le condenseur du premier cycle est réalisée par échange de chaleur avec un fluide environnemental à température ambiante.

**3.** Procédé selon la revendication 1 ou 2, **caractérisé par le fait que**, dans au moins un desdits cycles, le chauffage dudit adsorbant en zéolithe (Z) à régénérer est réalisé par échange de chaleur avec un fluide environnemental à température ambiante.

4. Procédé selon l'une des revendications 1 à 3, **caractérisé par le fait qu'**il comporte l'étape consistant à effectuer au moins un échange de chaleur, de préférence au moins N-1 échanges de chaleur, à chaque fois entre ledit adsorbant en zéolithe (Z) en cours d'adsorption dans une enceinte d'adsorption/désorption (121) d'un cycle et ledit adsorbant en zéolithe (Z) en cours de régénération dans une enceinte d'adsorption/désorption (223) du cycle suivant.

5. Procédé selon l'une des revendications 1 à 4, **caractérisé par le fait qu'**il comporte l'étape consistant à effectuer au moins un échange de chaleur, de préférence N-1 échanges de chaleur, à chaque fois entre le fluide frigorifique dans l'évaporateur (103, 203) d'un cycle et ledit adsorbant en zéolithe (Z) dans l'enceinte d'adsorption/désorption (220, 320) du cycle suivant en cours d'adsorption, pour refroidir ledit adsorbant en zéolithe.

6. Procédé selon l'une des revendications 1 à 5, **caractérisé par le fait que**, dans chaque cycle, on prévoit au moins deux enceintes d'adsorption/désorption, pour effectuer simultanément ladite adsorption du fluide frigorifique dans une (121, 221) desdites enceintes d'adsorption/désorption et ladite régénération de l'adsorbant en zéolithe (Z) dans une autre (123, 223) desdites enceintes d'adsorption/désorption.

7. Procédé selon la revendication 6, **caractérisé par le fait que**, dans chaque cycle, on prévoit au moins trois enceintes d'adsorption/désorption pour effectuer aussi simultanément une étape de refroidissement après régénération de l'adsorbant en zéolithe (Z) dans encore une autre (122, 222) desdites enceintes d'adsorption/désorption.

8. Procédé selon la revendication 7, **caractérisé par le fait qu'**il comporte l'étape consistant à effectuer au moins un échange de chaleur, de préférence N-1 échanges de chaleur, à chaque fois entre le fluide frigorifique dans l'évaporateur (103) d'un cycle et ledit adsorbant en zéolithe (Z) dans l'enceinte d'adsorption/désorption (222) du cycle suivant en cours de refroidissement après régénération.

9. Procédé selon l'une des revendications 1 à 8, **caractérisé par** l'étape consistant, dans au moins un desdits cycles, de préférence dans chacun desdits cycles, à refroidir ladite quantité de fluide frigorifique en phase vapeur par échange de chaleur avec une source à température ambiante avant de réintroduire ladite quantité de fluide frigorifique dans le condenseur.

10. Procédé selon l'une des revendications 1 à 9, **caractérisé par le fait que**, dans au moins un desdits cycles, la première pression ($P_2$) dans ledit condenseur (101, 201, 301, 401, 501, 601) est inférieure à 3 bar, de préférence voisine de la pression normale.

11. Procédé selon l'une des revendications 1 à 10, **caractérisé par le fait que**, dans au moins un desdits cycles, la pression maximale est inférieure à 5 bar, de préférence voisine de la pression normale.

12. Procédé selon l'une des revendications 1 à 11, **caractérisé par le fait que**, dans au moins un desdits cycles, ledit fluide frigorifique en phase liquide est introduit sous une forme atomisée dans l'évaporateur (103, 203, 303, 403, 503, 603).

13. Procédé selon l'une des revendications 1 à 12, **caractérisé par le fait que** la pression partielle d'air dans chaque cycle est inférieure à environ 1 kPa, de préférence inférieure à environ 0.1 kPa.

14. Procédé selon l'une des revendications 1 à 13, **caractérisé par le fait que** le fluide frigorifique dans le premier cycle (100, 400) est choisi dans le groupe constitué de l'eau, des alcools et de leurs mélanges.

15. Procédé selon la revendication 14, **caractérisé par le fait que** le fluide frigorifique dans le deuxième cycle (200, 500) est choisi dans le groupe constitué du butane, du butadiène, du propadiène, du propane et de leurs mélanges.

16. Procédé selon la revendication 15, **caractérisé par le fait qu'**il comporte un troisième cycle (300, 600) avec un fluide frigorifique choisi dans le groupe constitué de l'éthane, du dioxyde de carbone, du protoxyde d'azote et de leurs mélanges.

17. Procédé selon la revendication 16, **caractérisé par le fait qu'**il comporte un quatrième cycle avec un fluide frigorifique choisi dans le groupe constitué du méthane, du krypton et de leurs mélanges.

**18.** Procédé selon la revendication 17, **caractérisé par le fait qu'**il comporte un cinquième cycle avec un fluide frigorifique choisi dans le groupe constitué du néon, de l'oxygène, de l'hélium, de l'azote, de l'argon, du monoxyde de carbone et de leurs mélanges.

**19.** Procédé selon l'une des revendications 1 à 18, **caractérisé par le fait que**, dans au moins un desdits cycles, ledit fluide frigorifique présente une chaleur latente de vaporisation supérieure à 300kJ/kg, de préférence supérieure ou égale à environ 450kJ/kg.

**20.** Procédé selon l'une des revendications 1 à 19, **caractérisé par le fait que**, dans au moins un desdits cycles, la température de vaporisation ($T_1$) dans l'évaporateur est supérieure au point triple dudit fluide frigorifique.

**21.** Procédé selon l'une des revendications 1 à 20, **caractérisé par le fait que** ledit produit (P) est initialement en phase vapeur et qu'on refroidit ledit produit jusqu'à liquéfaction.

**22.** Procédé selon la revendication 21, **caractérisé par le fait que** ledit produit (P) est un gaz à usage de carburant ou de matière première polymérisable.

**23.** Procédé selon l'une des revendications 1 à 22, **caractérisé par le fait que** ledit produit (P) est un gaz à usage de matière première que l'on refroidit ou liquéfie entre -80°C et -220°C.

**24.** Dispositif pour la mise en oeuvre du procédé selon l'une des revendications 1 à 23, comprenant N étages de refroidissement ordonnés (100, 200, 300, 400, 500, 600) sous vide d'air, N étant un entier supérieur à 1, chaque étage comportant :

- un condenseur (101, 201, 301, 401, 501, 601) contenant un fluide frigorifique dans une phase liquide,
- un évaporateur (103, 203, 303, 403, 503, 603) relié audit condenseur par une conduite (104, 204, 304, 404, 504, 604),
- au moins une enceinte d'adsorption/désorption (120, 220, 320, 421-423, 521-523, 621-623) contenant un adsorbant en zéolithe (Z) et reliée audit évaporateur par l'intermédiaire d'une vanne amont (130, 230, 330),
- une conduite (160, 260, 360, 460, 560, 660) munie d'une vanne aval (150, 250, 350) pour renvoyer ledit fluide frigorifique depuis ladite enceinte d'adsorption/désorption vers ledit condenseur,
- un moyen de chauffage (140, 240, 243, 340) dans ladite ou chaque enceinte d'adsorption/désorption apte à chauffer ledit adsorbant en zéolithe jusqu'à une température de régénération,

ledit dispositif comportant N-1 échangeurs de chaleur (280, 380, 501, 601) agencés à chaque fois de manière à échanger la chaleur entre le fluide frigorifique dans l'évaporateur (103, 203, 403, 503) d'un étage et le fluide frigorifique dans le condenseur (201, 301, 501, 601) de l'étage suivant dans l'ordre des cycles pour refroidir ce dernier, et un échangeur de chaleur terminal (80, 701) agencé de manière à échanger la chaleur entre un produit à refroidir (P) et le fluide frigorifique dans au moins l'évaporateur du dernier étage (303, 603).

**25.** Dispositif selon la revendication 24, **caractérisé par le fait qu'**il comporte un échangeur de chaleur (126, 480) agencé de manière à échanger la chaleur entre le fluide frigorifique dans le condenseur (101, 401) du premier étage et un fluide environnemental à température ambiante.

**26.** Dispositif selon la revendication 24 ou 25, **caractérisé par le fait qu'**il comporte, en tant que moyens de chauffage d'au moins une desdites enceinte d'adsorption/désorption (521-523, 621-623), un échangeur de chaleur (540, 640) agencé de manière à échanger la chaleur entre ledit adsorbant en zéolithe (Z) en cours d'adsorption et un fluide environnemental à température ambiante.

**27.** Dispositif selon l'une des revendications 24 à 26, **caractérisé par le fait qu'**il comporte, dans au moins un desdits étages, un dispositif d'atomisation du liquide (435, 535, 635) agencé de manière à atomiser le fluide frigorifique en phase liquide lors de son introduction dans l'évaporateur (403, 503, 603).

**28.** Dispositif selon l'une des revendications 24 à 27, **caractérisé par le fait que**, dans au moins un desdits étages, une enceinte de refroidissement (216, 316) du fluide frigorifique est agencée entre ladite ou chaque enceinte d'adsorption/désorption (220, 320) et ledit condenseur (201, 301) et est en contact thermique avec une source de chaleur à température ambiante.

**29.** Dispositif selon l'une des revendications 24 à 28, **caractérisé par le fait qu'**il comporte, en tant que moyens de chauffage desdites enceintes d'adsorption/désorption, au moins un échangeur de chaleur (290), de préférence au moins N-1 échangeurs de chaleur, agencés à chaque fois de manière à échanger la chaleur entre ledit adsorbant en zéolithe (Z) en cours d'adsorption dans ladite ou une desdites enceinte d'adsorption/désorption (121) d'un étage et ledit adsorbant en zéolithe (Z) en cours de régénération dans ladite ou une desdites enceinte d'adsorption/désorption (223) de l'étage suivant.

**30.** Dispositif selon l'une des revendications 24 à 29, **caractérisé par le fait qu'**il comporte, en tant que moyens de refroidissement desdites enceintes d'adsorption/désorption, au moins N-1 échangeurs de chaleur (280 ; 380) agencés à chaque fois de manière à échanger la chaleur entre le fluide frigorifique dans l'évaporateur (103 ; 203) d'un étage et ledit adsorbant en zéolithe (Z) dans ladite ou chaque enceinte d'adsorption/désorption (221, 222, 223 ; 320) de l'étage suivant.

**31.** Dispositif selon l'une des revendications 24 à 30, **caractérisé par le fait que** chaque étage comprend au moins deux enceintes d'adsorption/désorption (121, 122, 123), chacune étant reliée audit évaporateur (103) par l'intermédiaire d'une vanne amont respective (131, 132, 133) et audit condenseur (101) par l'intermédiaire d'une vanne aval respective (151, 152, 153).

**32.** Dispositif selon la revendication 31, **caractérisé par le fait qu'**il comporte un moyen de commande desdites vannes (105) programmé pour ouvrir et fermer lesdites vannes amont et aval selon un cycle de temps masqué, dans lequel chaque enceinte (121, 122, 123) effectue successivement une étape d'adsorption, pour laquelle la vanne amont (131) est ouverte et la vanne aval (151) est fermée, une étape de régénération ou désorption, pour laquelle la vanne aval (153) est ouverte et la vanne amont (133) est fermée, et une étape de refroidissement après régénération, pour laquelle la vanne aval (152) et la vanne amont (132) sont fermées.

**33.** Dispositif selon l'une des revendications 24 à 32, **caractérisé par le fait qu'**il est associé à une enceinte (1) contenant ledit produit à refroidir, ledit échangeur de chaleur terminal (26) étant supporté à l'intérieur de ladite enceinte pour échanger la chaleur entre le fluide frigorifique dans l'évaporateur (303) du dernier étage et le produit (P) en phase liquide ou vapeur contenu dans ladite enceinte.

**34.** Navire méthanier équipé d'une cuve de stockage (1) pour gaz liquéfié (P) à laquelle est associé un dispositif selon la revendication 33 en tant qu'unité frigorifique de re-liquéfaction.

**35.** Usine de liquéfaction de gaz comportant une enceinte de refroidissement (1) pour le gaz à liquéfier (P) qui est associée à un dispositif selon la revendication 33.

**Claims**

**1.** A method for cooling a product (P) comprising N ordered adsorption/desorption cycles (100, 200, 300, 400, 500, 600) performed under vacuum, N being an integer greater than 1, each cycle comprising the steps consisting in:

- extracting heat from a refrigerating fluid in the vapor phase in a condenser (101, 201, 301, 401, 501, 601) at a first pressure ($P_2$) below the critical pressure of said fluid for condensing said refrigerating fluid,
- introducing said refrigerating fluid in the liquid phase into an evaporator (103, 203, 303, 403, 503, 603) at a second pressure ($P_1$) lower than the first pressure in order to vaporize some of said refrigerating fluid and cool the rest of said refrigerating fluid to a vaporization temperature ($T_1$) of said refrigerating fluid at said second pressure, said vaporization temperature decreasing from one cycle to the next, said first and second pressures being chosen in each cycle so that said vaporization temperature ($T_1$) in one cycle is each time lower than the condensation temperature ($T_2$) of the refrigeration fluid in the next cycle at the first pressure of said next cycle,
- supplying heat to the liquid fraction of said refrigerating fluid at said second pressure in said evaporator in order to evaporate said refrigerating fluid,
- adsorbing said refrigerating fluid in the vapor phase in at least one adsorption/desorption chamber (120, 220, 320, 421-423, 521-523, 621-623) connected to said evaporator and containing a zeolite adsorbent (Z),
- once a quantity of said refrigerating fluid has been adsorbed into said zeolite adsorbent, regenerating said zeolite adsorbent by heating in order to desorb said quantity of refrigerating fluid in the vapor phase,
- returning said quantity of refrigerating fluid in the vapor phase to said condenser,

said method further comprising the steps consisting in:

performing N-1 heat exchanges, each performed between the refrigerating fluid in the evaporator (103, 203, 403, 503) of one cycle and the refrigerating fluid in the condenser (201, 301, 501, 601) of the next cycle in the order of the cycles in order thus to supply said heat to said evaporator and extract said heat in said condenser, and cooling said product by exchange of heat with the refrigerating fluid at least in the evaporator (303, 603) of the last cycle.

2. The method as claimed in claim 1, **characterized in that** said extraction of heat in the condenser of the first cycle is performed by exchange of heat with an environmental fluid at ambient temperature.

3. The method as claimed in claim 1 or 2, **characterized in that**, in at least one of said cycles, the heating of said zeolite adsorbent (Z) to be regenerated is performed by exchange of heat with an environmental fluid at ambient temperature.

4. The method as claimed in one of claims 1 to 3, **characterized in that** it comprises the step that consists in performing at least one exchange of heat, preferably at least N-1 exchanges of heat, each heat exchange being between said zeolite adsorbent (Z) undergoing adsorption in an adsorption/desorption chamber (121) of one cycle and said zeolite adsorbent (Z) undergoing regeneration in an adsorption/desorption chamber (223) of the next cycle.

5. The method as claimed in one of claims 1 to 4, **characterized in that** it comprises the step that consists in performing at least one exchange of heat, preferably N-1 exchanges of heat, each heat exchange being between the refrigerating fluid in the evaporator (103, 203) of one cycle and said zeolite adsorbent (Z) in the adsorption/desorption chamber (220, 320) of the next cycle undergoing adsorption, in order to cool said zeolite adsorbent.

6. The method as claimed in one of claims 1 to 5, **characterized in that**, in each cycle, there are at least two adsorption/desorption chambers, so that said adsorption of the refrigerating fluid can be performed in one (121, 221) of said adsorption/desorption chambers while at the same time said regeneration of the zeolite adsorbent (Z) is being performed in another (123, 223) of said adsorption/desorption chambers.

7. The method as claimed in claim 6, **characterized in that**, in each cycle, there are at least three adsorption/desorption chambers so that a step of cooling the zeolite adsorbent (Z) after regeneration can also be performed at the same time in yet another (122, 222) of said adsorption/desorption chambers.

8. The method as claimed in claim 7, **characterized in that** it comprises the step that consists in performing at least one exchange of heat, preferably N-1 exchanges of heat, each heat exchange being between the refrigerating fluid in the evaporator (103) of one cycle and said zeolite adsorbent (Z) in the adsorption/desorption chamber (222) of the next cycle undergoing post-regeneration cooling.

9. The method as claimed in one of claims 1 to 8, **characterized by** the step that consists, in at least one of said cycles, preferably in each of said cycles, in cooling said quantity of refrigerating fluid in the vapor phase by exchange of heat with a source at ambient temperature before said quantity of refrigerating fluid is reintroduced into the condenser.

10. The method as claimed in one of claims 1 to 9, **characterized in that**, in at least one of said cycles, the first pressure ($P_2$) in said condenser (101, 201, 301, 401, 501, 601) is lower than 3 bar, preferably close to normal pressure.

11. The method as claimed in one of claims 1 to 10, **characterized in that**, in at least one of said cycles, the maximum pressure is lower than 5 bar, preferably close to normal pressure.

12. The method as claimed in one of claims 1 to 11, **characterized in that**, in at least one of said cycles, said refrigerating fluid in the liquid phase is introduced in atomized form into the evaporator (103, 203, 303, 403, 503, 603).

13. The method as claimed in one of claims 1 to 12, **characterized in that** the partial pressure of air in each cycle is less than about 1 kPa, preferably less than about 0.1 kPa.

14. The method as claimed in one of claims 1 to 13, **characterized in that** the refrigerating fluid in the first cycle (100, 400) is chosen from the group consisting of water, alcohols and mixtures thereof.

**15.** The method as claimed in claim 14, **characterized in that** the refrigerating fluid in the second cycle (200, 500) is chosen from the group consisting of butane, butadiene, propadiene, propane and mixtures thereof.

**16.** The method as claimed in claim 15, **characterized in that** it comprises a third cycle (300, 600) with a refrigerating fluid chosen from the group consisting of ethane, carbon dioxide, nitrous oxide and mixtures thereof.

**17.** The method as claimed in claim 16, **characterized in that** it comprises a fourth cycle with a refrigerating fluid chosen from the group consisting of methane, krypton and mixtures thereof.

**18.** The method as claimed in claim 17, **characterized in that** it comprises a fifth cycle with a refrigerating fluid chosen from the group consisting of neon, oxygen, helium, nitrogen, argon, carbon monoxide and mixtures thereof.

**19.** The method as claimed in one of claims 1 to 18, **characterized in that**, in at least one of said cycles, said refrigerating fluid has a latent heat of vaporization higher than 300 kJ/kg, preferably greater than or equal to about 450 kJ/kg.

**20.** The method as claimed in one of claims 1 to 19, **characterized in that**, in at least one of said cycles, the vaporization temperature ($T_1$) in the evaporator is above the triple point of said refrigerating fluid.

**21.** The method as claimed in one of claims 1 to 20, **characterized in that** said product (P) is initially in the vapor phase and **in that** said product is cooled until it liquefies.

**22.** The method as claimed in claim 21, **characterized in that** said product (P) is a gas used as a fuel or as a polymerizable raw material.

**23.** The method as claimed in one of claims 1 to 22, **characterized in that** said product (P) is a gas for use as a raw material that is cooled or liquefied to between -80°C and -220°C.

**24.** A device for implementing the method as claimed in one of claims 1 to 23, comprising N ordered cooling stages (100, 200, 300, 400, 500, 600) performed under vacuum, N being an integer greater than 1, each stage comprising:

- a condenser (101, 201, 301, 401, 501, 601) which contains a refrigerating fluid in a liquid phase,
- an evaporator (103, 203, 303, 403, 503, 603) connected to said condenser by a pipe (104, 204, 304, 404, 504, 604),
- at least one adsorption/desorption chamber (120, 220, 320, 421-423, 521-523, 621-623) containing a zeolite adsorbent (Z) and connected to said evaporator via an upstream valve (130, 230, 330),
- a pipe (160, 260, 360, 460, 560, 660) equipped with a downstream valve (150, 250, 350) for returning said refrigerating fluid from said adsorption/desorption chamber to said condenser,
- a heating means (140, 240, 243, 340) in said or each adsorption/desorption chamber able to heat said zeolite adsorbent to a regeneration temperature,

said device comprising N-1 heat exchangers (280, 380, 501, 601) each arranged in such a way as to exchange heat between the refrigerating fluid in the evaporator (103, 203, 403, 503) of one stage and the refrigerating fluid in the condenser (201, 301, 501, 601) of the next stage in the order of the cycles in order to cool this fluid, and a final heat exchanger (80, 701) arranged in such a way as to exchange heat between a product (P) that is to be cooled and the refrigerating fluid in at least the evaporator of the last stage (303, 603).

**25.** The device as claimed in claim 24, **characterized in that** it comprises a heat exchanger (126, 480) arranged in such a way as to exchange heat between the refrigerating fluid in the condenser (101, 401) of the first stage and an environmental fluid at ambient temperature.

**26.** The device as claimed in claim 24 or 25, **characterized in that** it comprises, by way of heating means for heating at least one of said adsorption/desorption chambers (521-523, 621-623), a heat exchanger (540, 640) arranged in such a way as to exchange heat between said zeolite adsorbent (Z) undergoing adsorption and an environmental fluid at ambient temperature.

**27.** The device as claimed in one of claims 24 to 26, **characterized in that** it comprises, in at least one of said stages, a liquid-atomization device (435, 535, 635) arranged in such a way as to atomize the refrigerating fluid in the liquid phase as it is introduced into the evaporator (403, 503, 603).

**28.** The device as claimed in one of claims 24 to 27, **characterized in that**, in at least one of said stages, a cooling chamber (216, 316) for cooling the refrigerating fluid is arranged between said or each adsorption/desorption chamber (220, 320) and said condenser (201, 301) and is in thermal contact with a source of heat at ambient temperature.

**29.** The device as claimed in one of claims 24 to 28, **characterized in that** it comprises, by way of heating means for heating said adsorption/desorption chambers, at least one heat exchanger (290), preferably at least N-1 heat exchangers, each arranged in such a way as to exchange heat between said zeolite adsorbent (Z) undergoing adsorption in said or one of said adsorption/desorption chamber(s) (121) of one stage and said zeolite adsorbent (Z) undergoing regeneration in said or one of said adsorption/desorption chamber(s) (223) of the next stage.

**30.** The device as claimed in one of claims 24 to 29, **characterized in that** it comprises, by way of cooling means for cooling said adsorption/desorption chambers, at least N-1 heat exchangers (280; 380) each arranged in such a way as to exchange heat between the refrigerating fluid in the evaporator (103; 203) of one stage and said zeolite adsorbent (Z) in said or each adsorption/desorption chamber (221, 222, 223; 320) of the next stage.

**31.** The device as claimed in one of claims 24 to 30, **characterized in that** each stage comprises at least two adsorption/desorption chambers (121, 122, 123) each connected to said evaporator (103) via a respective upstream valve (131, 132, 133) and to said condenser (101) via a respective downstream valve (151, 152, 153).

**32.** The device as claimed in claim 31, **characterized in that** it comprises a means of controlling said valves (105) which is programmed to open and close said upstream and downstream valves in a cycle of concurrent operations, in which each chamber (121, 122, 123) performs in succession an adsorption step, for which the upstream valve (131) is open and the downstream valve (151) is closed, a regeneration or desorption step for which the downstream valve (153) is open and the upstream valve (133) is closed, and a post-regeneration cooling step for which the downstream valve (152) and the upstream valve (132) are closed.

**33.** The device as claimed in one of claims 24 to 32, **characterized in that** it is associated with a chamber (1) containing said product that is to be cooled, said final heat exchanger (26) being supported within said chamber in order to exchange heat between the refrigerating fluid in the evaporator (303) of the last stage and the product (P) in the liquid or vapor phase contained in said chamber.

**34.** A methane tanker equipped with a storage tank (1) for liquefied gas (P), with which a device as claimed in claim 33 is associated by way of a refrigerating re-liquefaction unit.

**35.** A gas-liquefaction plant comprising a cooling chamber (1) for cooling the gas (P) that is to be liquefied, which chamber is associated with a device as claimed in claim 33.

**Patentansprüche**

**1.** Verfahren zum Kühlen eines Produktes (P), das N geordnete Adsorptions-/Desorptionszyklen (100, 200, 300, 400, 500, 600) unter luftleeren Bedingungen aufweist, wobei N eine ganze Zahl größer 1 ist und jeder Zyklus die Schritte umfasst, bestehend aus:

- Abführen von Wärme eines dampfförmigen Kühlfluids in einem Verflüssiger (101, 201, 301, 401, 501, 601) bei einem ersten Druck ($P_2$), der kleiner als der kritische Druck des Fluids zur Kondensation des Kühlfluids ist, um das das Kühlfluid zu kondensieren,
- Einleiten des Kühlfluids in der flüssigen Phase in einen Verdampfer (103, 203, 303, 403, 503, 603) bei einem zweiten Druck ($P_1$), der kleiner als der erste Druck ist, um einen Teil des Kühlfluids zu verdampfen und den anderen Teil des Kühlfluids bis auf eine Verdampfungstemperatur ($T_1$) des Kühlfluids bei dem zweiten Druck abzukühlen, wobei die Verdampfungstemperatur von einem Zyklus auf den nächsten abnimmt, wobei die ersten und zweiten Drücke in jedem Zyklus so gewählt sind, dass die Verdampfungstemperatur ($T_1$) in einem Zyklus gleichzeitig kleiner als die Kondensationstemperatur ($T_2$) des Kühlfluids in dem folgenden Zyklus bei dem ersten Druck des folgenden Zyklus ist,
- Übertragen von Wärme auf den ersten flüssigen Teil des Kühlfluids bei dem zweiten Druck in dem Verdampfer, um das Kühlfluid zu verdampfen,
- Adsorbieren der Kühlflüssigkeit in der Dampfphase in wenigstens einem Adsorptions-/Desorptionsraum (120, 220, 320, 421-423, 521-523, 621-623), der mit dem Verdampfer verbunden ist und ein zeolithisches Adsorptionsmittel (Z) enthält,

- nachdem eine gewisse Menge des Kühlfluids in dem zeolithischen Adsorptionsmittel adsorbiert wurde, regenerieren des zeolithischen Adsorptionsmittel durch Erwärmung, um die gewisse Menge dampfförmiges Kühlfluid zu desorbieren,
- Zurückleiten der gewissen Menge dampfförmiges Kühlfluid in den Verflüssiger,

wobei das Verfahren außerdem die Schritte umfasst, bestehend aus:

Durchführen von N-1 Wärmtauschvorgängen jeweils zwischen dem Kühlfluid in dem Verdampfer (103, 203, 403, 503) eines Zyklus und dem Kühlfluid in dem Verflüssiger (201, 301, 501, 601) des in der Abfolge der Zyklen folgenden Zyklus, um so die Einbringung von Wärme in den Verdampfer und den Abzug von Wärme aus dem Verflüssiger zu verwirklichen,
und Abkühlen des Produktes durch Wärmeaustausch mit dem Kühlfluid zumindest in dem Verdampfer (303. 603) des letzten Zyklus.

2. Verfahren gemäß Anspruch 1, **dadurch gekennzeichnet, dass** die Abfuhr von Wärme aus dem Verflüssiger des ersten Zyklus durch Wärmeaustausch mit einem Umgebungsfluid bei Umgebungstemperatur verwirklicht wird.

3. Verfahren gemäß einem der Ansprüche 1 oder 2, **dadurch gekennzeichnet, dass** in wenigstens einem der Zyklen die Erwärmung des zeolithischen Adsorptionsmittels (Z) zur Regenerierung durch Wärmeaustausch mit einem Umgebungsfluid bei Umgebungstemperatur verwirklicht wird.

4. Verfahren gemäß einem der Ansprüche 1 bis 3, **dadurch gekennzeichnet, dass** es den Schritt umfasst, bestehend aus dem Durchführen von jeweils zumindest einem Wärmeaustausch, vorzugsweise von wenigstens N-1 Wärmeaustauschen zwischen dem zeolithischen Absorptionsmittel (Z) während der Adsorption in einem Adsorptions-/Desorptionsraum (121) eines Zyklus und dem zeolithischen Adsorptionsmittel (Z) während der Regeneration in einem Adsorptions-/Desorptionsraum (223) des folgenden Zyklus.

5. Verfahren gemäß einem der Ansprüche 1 bis 4, **dadurch gekennzeichnet, dass** es den Schritt umfasst bestehend aus der Durchführung von jeweils wenigstens einem Wärmeaustausch, vorzugsweise von N-1 Wärmeaustauschen, zwischen dem Kühlfluid in dem Verdampfer (103, 203) eines Zyklus und dem zeolithischen Adsorptionsmittel (Z) in dem Adsorptions-/Desorptionsraum (220, 320) des folgenden Zyklus während der Adsorption, um das zeolithische Adsorptionsmittel abzukühlen.

6. Verfahren gemäß einem der Ansprüche 1 bis 5, **dadurch gekennzeichnet, dass** man in jedem Zyklus wenigstens zwei Adsorptions-/Desorptionsräume vorsieht, um gleichzeitig die Adsorption des Kühlfluids in einem (121, 221) der Adsorptions-/Desorptionsräume und die Regeneration des zeolithischen Adsorptionsmittels (Z) in einem anderen (123, 223) der Adsorptions-/Desorptionsräume durchzuführen.

7. Verfahren gemäß Anspruch 6, **dadurch gekennzeichnet, dass** man in jedem Zyklus wenigstens drei Adsorptions-/Desorptionsräume vorsieht, um außerdem gleichzeitig einen Kühlschritt nach der Regeneratioin des zeolithischen Adsorptionsmittels (Z) in einem weiteren (122, 222) der Adsorptions-/Desorptionsräume durchzuführen.

8. Verfahren gemäß Anspruch 7, **dadurch gekennzeichnet, dass** es den Schritt umfasst bestehend aus der Durchführung von jeweils zumindest einem Wärmeaustausch, vorzugsweise von N-1 Wärmeaustauschen, zwischen dem Kühlfluid in dem Verdampfer (103) eines Zyklus und dem zeolithischen Adsorptionsmittel (Z) in dem Adsorptions-/Desorptionsraum (222) des folgenden Zyklus während des Abkühlens nach der Regeneration.

9. Verfahren gemäß einem der Ansprüche 1 bis 8, **gekennzeichnet durch** den Schritt, der darin besteht, dass man während wenigstens eines der Zyklen, vorzugsweise in jedem der Zyklen, die gewisse Menge dampfförmiges Kühlfluid **durch** Wärmeaustausch mit einer auf Umgebungstemperatur befindlichen Quelle abkühlt, bevor die gewisse Menge Kühlfluid wieder in den Verflüssiger zurückgeleitet wird.

10. Verfahren gemäß einem der Ansprüche 1 bis 9, **dadurch gekennzeichnet, dass** in wenigstens einem der Zyklen der erste Druck ($P_2$) in dem Verflüssiger (101, 201, 301, 401, 501, 601) weniger als 3 bar beträgt und vorzugsweise in der Nähe des Normaldrucks liegt.

11. Verfahren gemäß einem der Ansprüche 1 bis 10, **dadurch gekennzeichnet, dass** in wenigstens einem der Zyklen der Maximaldruck weniger als 5 bar beträgt und vorzugsweise in der Nähe des Normaldrucks liegt.

12. Verfahren gemäß einem der Ansprüche 1 bis 11, **dadurch gekennzeichnet, dass** in wenigstens einem der Zyklen das in der flüssigen Phase befindliche Kühlfluid in zerstäubter Form in den Verdampfer (103, 203, 303, 403, 503, 603) eingeleitet wird.

13. Verfahren gemäß einem der Ansprüche 1 bis 12, **dadurch gekennzeichnet, dass** der Luftpartialdruck in jedem Zyklus weniger als etwa 1 kPa und vorzugsweise weniger als etwa 0,1 kPa beträgt.

14. Verfahren gemäß einem der Ansprüche 1 bis 13, **dadurch gekennzeichnet, dass** das Kühlfluid in dem ersten Zyklus (100, 400) aus einer Gruppe gewählt wird, bestehend aus Wasser, Alkoholen und deren Gemische.

15. Verfahren gemäß Anspruch 14, **dadurch gekennzeichnet, dass** das Kühlfluid in dem zweiten Zyklus (200, 500) aus der Gruppe gewählt wird, bestehend aus Butan, Butadien, Propadien, Propan und deren Gemische.

16. Verfahren gemäß Anspruch 15, **dadurch gekennzeichnet, dass** es einen dritten Zyklus (300, 600) mit einem Kühlfluid aufweist, das ausgewählt ist aus der Gruppe bestehend aus Ethan, Kohlendioxid, Lachgas und deren Gemische.

17. Verfahren gemäß Anspruch 16, **dadurch gekennzeichnet, dass** es einen vierten Zyklus mit einem Kühlfluid aufweist, das ausgewählt ist aus der Gruppe bestehend aus Methan, Krypton und deren Gemische.

18. Verfahren gemäß Anspruch 17, **dadurch gekennzeichnet, dass** es einen fünften Zyklus mit einem Kühlfluid umfasst, das ausgewählt ist aus der Gruppe bestehend aus Neon, Sauerstoff, Helium, Stickstoff, Argon, Kohlenmonoxid und deren Gemische.

19. Verfahren gemäß einem der Ansprüche 1 bis 18, **dadurch gekennzeichnet, dass** das Kühlfluid in wenigstens einem der Zyklen eine latente Verdampfungswärme aufweist, die größer als 300 kJ/kg, vorzugsweise größer als oder gleich etwa 450 kJ/kg ist.

20. Verfahren gemäß einem der Ansprüche 1 bis 19, **dadurch gekennzeichnet, dass** in wenigstens einem der Zyklen die Verdampfungstemperatur ($T_1$) in dem Verdampfer höher als der Tripelpunkt des Kühlfluids ist.

21. Verfahren gemäß einem der Ansprüche 1 bis 20, **dadurch gekennzeichnet, dass** das Produkt (P) sich ursprünglich in der Gasphase befindet und dass man das Produkt bis zur Verflüssigung abkühlt.

22. Verfahren gemäß Anspruch 21, **dadurch gekennzeichnet, dass** das Produkt (P) ein als Brennstoff oder als polymerisierbares Ausgangsmaterial dienendes Gas ist.

23. Verfahren gemäß einem der Ansprüche 1 bis 22, **dadurch gekennzeichnet, dass** das Produkt (P) ein als Ausgangsmaterial dienendes Gas ist, das man auf eine Temperatur zwischen -80 °C und -220 °C abkühlt oder verflüssigt.

24. Vorrichtung zur Durchführung des Verfahrens gemäß einem der Ansprüche 1 bis 23, die N geordnete luftleere Kühlstufen (100, 200, 300, 400, 500, 600) umfasst, wobei N eine ganze Zahl größer 1 ist, wobei jede Stufe umfasst:

   - einen Verflüssiger (101, 201, 301, 401, 501, 601) der ein Kühlfluid in der flüssigen Phase enthält,
   - einen Verdampfer (103, 203, 303, 403, 503, 603), der über eine Leitung (104, 204, 304, 404, 504, 604) mit dem Verflüssiger verbunden ist,
   - wenigstens einen Adsorptions-/Desorptionsraum (120, 220, 320, 421-423, 521-523, 621-623), der ein zeolithisches Adsorptionsmittel (Z) enthält und mittels eines Zulaufsventils (130, 230, 330) mit dem Verdampfer verbunden ist,
   - eine Leitung (160, 260, 360, 460, 560, 660), die mit einem Ablaufventil (150, 250, 350) versehen ist, um das Kühlfluid von dem Adsorptions-/Desorptionsraum in den Verflüssiger zurückzuleiten,
   - ein Heizmittel (140, 240, 243, 340) in dem oder jedem Adsorptions-/Desorptionsraum, das in der Lage ist, das zeolithische Adsorptionsmittel auf eine Regenerationstemperatur zu erwärmen,

   wobei die Vorrichtung N-1 Wärmetauscher (280, 380, 501, 601), die jeweils so angeordnet sind, dass Wärme zwischen dem Kühlfluid in dem Verdampfer (103, 203, 403, 503) einer Stufe und dem Kühlfluid in dem Verflüssiger (201, 301, 501, 601) der in der Zyklusreihenfolge folgenden Stufe ausgetauscht wird, um letzteres abzukühlen und einen Endwärmetauscher (80, 701) der so angeordnet ist, dass Wärme zwischen einem zu kühlenden Produkt (P) und dem Kühlfluid zumindest in dem Verdampfer der letzten Stufe (303, 603) ausgetauscht wird, aufweist.

25. Vorrichtung gemäß Anspruch 24, **dadurch gekennzeichnet, dass** sie einen Wärmetauscher (126, 480) aufweist, der so angeordnet ist, dass Wärme zwischen dem Kühlfluid in dem Verflüssiger (101, 401) der ersten Stufe und einem Umgebungsfluid bei Umgebungstemperatur ausgetauscht wird.

26. Vorrichtung gemäß einem der Ansprüche 24 oder 25, **dadurch gekennzeichnet, dass** sie einen als Heizmittel von wenigstens einem der Adsorptions-/Desorptionsräume (521 - 523, 621 - 623) dienenden Wärmetauscher (540, 640) aufweist, der so angeordnet ist, dass Wärme zwischen dem zeolithischen Adsorptionsmittel (Z) während der Adsorption und einem Umgebungsfluid bei Umgebungstemperatur ausgetauscht wird.

27. Vorrichtung gemäß einem der Ansprüche 24 bis 26, **dadurch gekennzeichnet, dass** sie in wenigstens einer der Stufen eine Flüssigkeitszerstäubungsvorrichtung (435, 535, 635) aufweist, die so angeordnet ist, dass das in der flüssigen Phase befindliche Kühlfluid bei seiner Einleitung in den Verdampfer (403, 503, 603) zerstäubt wird.

28. Vorrichtung gemäß einem der Ansprüche 24 bis 27, **dadurch gekennzeichnet, dass** in wenigstens einer der Stufen ein Kühlraum (216, 316) der Kühlflüssigkeit zwischen dem oder jedem Adsorptions-/Desorptionsraum (220, 320) und dem Verflüssiger (201, 301) angeordnet ist und in thermischen Kontakt mit einer auf Umgebungstemperatur befindlichen Wärmequelle steht.

29. Vorrichtung gemäß einem der Ansprüche 24 bis 28, **dadurch gekennzeichnet, dass** sie wenigstens einen als Heizmittel der Adsorptions-/Desorptionsräume dienenden Wärmetauscher (290), vorzugsweise wenigstens N-1 Wärmetauscher, umfasst, die jeweils so angeordnet sind, dass Wärme zwischen dem zeolithischen Adsorptionsmittel (Z) während der Adsorption in den oder einem der Adsorption-/Desorptionsräume (221) einer Stufe und dem zeolithischen Adsorptionsmittel (Z) während der Regeneration in dem oder einem der Adsorptions-/Desorptionsräume (223) der folgenden Stufe ausgetauscht wird.

30. Vorrichtung gemäß einem der Ansprüche 24 bis 29, **dadurch gekennzeichnet, dass** sie als Kühlmittel der Adsorptions-/Desorptionsräume wenigstens N-1 Wärmetauscher (280; 380) aufweist, die jeweils so angeordnet sind, dass Wärme zwischen dem Kühlfluid in dem Verdampfer (103; 203) einer Stufe und dem zeolithischen Absorptionsmittel (Z) in dem oder jedem Adsorptions-/Desorptionsraum (221, 222, 223; 320) der folgenden Stufe ausgetauscht wird.

31. Vorrichtung gemäß einem der Ansprüche 24 bis 30, **dadurch gekennzeichnet, dass** jede Stufe wenigstens zwei Adsorptions-/Desorptionsräume (121, 122, 123) umfasst, wobei jeder über ein entsprechendes Zulaufventil (131, 132, 133) mit dem Verdampfer (103) und über ein entsprechendes Ablaufventil (151, 152, 153) mit dem Verflüssiger (101) verbunden ist.

32. Vorrichtung gemäß Anspruch 31, **dadurch gekennzeichnet, dass** sie ein Steuermittel für die Ventile (105) aufweist, das programmiert ist, um die Zulauf- und Ablaufventile in einem überlappenden Zeitzyklus zu öffnen und zu schließen, in welchem jeder Raum (121, 122, 123) nacheinander einen Adsorptionsschritt, bei dem das Zulaufventil (131) offen und das Ablaufventil (151) geschlossen ist, einen Regenerations- oder Desorptionsschritt, bei dem das Ablaufventil (153) offen und das Zulaufventil (133) geschlossen ist, und einen Kühlschritt nach Regeneration, bei welchem das Ablaufventil (152) und das Zulaufventil (132) geschlossen sind, durchläuft.

33. Vorrichtung gemäß einem der Ansprüche 24 bis 32, **dadurch gekennzeichnet, dass** sie einem Raum (1) zugeordnet ist, welcher das zu kühlende Produkt enthält, wobei der Endwärmetauscher (26) im Inneren des Raums angeordnet ist, um die Wärme zwischen dem Kühlfluid in dem Verdampfer (303) der letzten Stufe und dem in der der flüssigen oder gasfömigen Phase befindlichen, in dem Raum enthaltenen Produkt (P) auszutauschen.

34. Gastankschiff, das mit einem Lagertank (1) für Flüssiggas (P) ausgerüstet ist, welchem eine Vorrichtung gemäß Anspruch 33 als Kühleinheit zur Wiederverflüssigung zugeordnet ist.

35. Gasverflüssigungsanlage mit einem Kühlraum (1) für das zu verflüssigende Gas (P), welcher einer Vorrichtung gemäß Anspruch 33 zugeordnet ist.

FIG.1

EP 1 631 774 B1

FIG.2

FIG.3

FIG.4

FIG.5

FIG.7

FIG.6

FIG.8

FIG.9

FIG.10

FIG.11

FIG.12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2489101
- US 5339649 A
- EP 470886 A
- FR 2785034 A1